# EUROPEAN PATENT APPLICATION

(11) **EP 4 769 586 A1**
(43) Date of publication of application: **01.07.2026**
(21) Application number: 24869601.5
(22) Date of filing: 01.03.2024
(51) Int. Cl.: H01M 10/04, H01M 50/249, H01M 50/244

(54) **BATTERY AND VEHICLE**

(30) Priority: 27.09.2023 CN 202311264394; 27.09.2023 CN 202311265770; 27.09.2023 CN 202322642524 U
(71) Applicant: Contemporary Amperex Technology Co., Limited, Ningde, Fujian 352100 (CN)
(72) Inventor: WU, Kai, Fujian 352100 (CN); JIN, Haizu, Fujian 352100 (CN); ZHAO, Fenggang, Fujian 352100 (CN); CHEN, Wei, Fujian 352100 (CN); NIE, Xianzhen, Fujian 352100 (CN); ZHENG, Yulian, Fujian 352100 (CN); ZHOU, Wenlin, Fujian 352100 (CN)
(74) Representative: Gong, Jinping
(86) International application number: PCT/CN2024/079706
(87) International publication number: WO 2025/066029

(57) **Abstract**

Embodiments of the present disclosure provide a battery and a vehicle. The vehicle includes a support plate and a battery. The support plate has a raised portion, and the raised portion forms an accommodating space. The battery is disposed on a side of the support plate where the accommodating space is provided, the battery includes an accommodating box and a battery assembly, the battery assembly is accommodated in the accommodating box, and a portion of the battery assembly extends into the accommodating space. According to the vehicle in the embodiments of the present disclosure, the support plate is provided with the raised portion and a portion of the battery assembly extends into the accommodating space of the raised portion. In this way, the raised portion is allowed to utilize vacant space of interior space of the vehicle, thereby increasing utilization of space inside the vehicle and making structure of the vehicle more compact. Moreover, this helps expand the space available in the vehicle for arrangement of the battery assembly, thereby helping increase capacity of the battery, or helping reduce the overall size of the vehicle in response to a fixed capacity of the battery.

## Description

### CROSS-REFERENCE TO RELATED DISCLOSURE

The present disclosure is filed based on Chinese Patent Publication No. 202311265770.4, published on September 27, 2023 and entitled "BATTERY AND VEHICLE"; Chinese Patent Publication No. 202322642524.8, published on September 27, 2023 and entitled "VEHICLE"; and Chinese Patent Publication No. 202311264394.7, published on September 27, 2023 and entitled "BATTERY CELL, COVER PLATE ASSEMBLY, BATTERY AND VEHICLE", and claims priority to these Chinese patent disclosures, which are incorporated herein by reference in their entirety.

### TECHNICAL FIELD

The present disclosure relates to the technical field of vehicles, and in particular to a battery and a vehicle.

### BACKGROUND

New energy batteries are more and more widely applied in life and industry. For example, new energy vehicles equipped with batteries have been widely used.

Batteries in new energy vehicles take up interior space of vehicles.

When new energy vehicles utilize electrically driven modules, capacity of the batteries directly determines the maximum range of the vehicles. Therefore, within the limited space of a vehicle, how to utilize as much space as possible for arrangement of batteries directly affects the maximum range of the vehicle, which is of great significance for alleviating users' anxiety about the range, reducing charging frequency, and improving user experience.

### SUMMARY OF THE INVENTION

In view of this, embodiments of the present disclosure are intended to provide a vehicle and a battery capable of increasing utilization of space inside the vehicle.

In order to achieve the above objective, technical solutions in the embodiments of the present disclosure are implemented as follows.

Embodiments of the present disclosure provide a vehicle, including:
a support plate having a raised portion, the raised portion forming an accommodating space; and
a battery disposed on a side of the support plate where the accommodating space is provided, the battery comprising an accommodating box and a battery assembly, the battery assembly being accommodated in the accommodating box, and a portion of the battery assembly extending into the accommodating space.

According to the vehicle support plate in the embodiments of the present disclosure, since the support plate is provided with the raised portion, the raised portion is allowed to utilize vacant space of interior space of the vehicle, thereby increasing utilization of space inside the vehicle and making structure of the vehicle more compact; moreover, the raised portion forms the accommodating space, which helps expand the space available in the vehicle for arrangement of the battery assembly; furthermore, a portion of the battery assembly extends into the accommodating space, which increases capacity of the battery, or helps reduce the overall size of the vehicle in response to a fixed capacity of the battery.

In some embodiments, the battery assembly includes a protruding portion, at least part of the protruding portion being accommodated in the accommodating space. This enables the part, located outside the accommodating space, of the battery assembly to have a regular-shaped outer contour, thereby enabling the accommodating box that covers this part correspondingly to have a regular shape, enabling the part of the vehicle formed with the accommodating box to have a regular shape, and helping reduce drag coefficient. On one hand, this helps reduce the size of the accommodating box and make the structure of the battery more compact; and on the other hand, this enables the part of the vehicle formed with the accommodating box to have a smoother outer contour, and helps decrease drag coefficient of the vehicle and increase ground clearance of the vehicle, thereby reducing occurrence of the increased drag coefficient due to the accommodating box and damage to the battery caused by collisions with road debris during traveling of the vehicle.

In some embodiments, in a projection plane perpendicular to a raising direction of the raised portion, part of a projection of the battery assembly is located outside a projection of the accommodating space. This helps the battery assembly utilize the space of one side of the support plate better and helps increase capacity of the battery.

In some embodiments, the battery assembly further includes a plurality of battery cells, each of the battery cells includes a housing, the housing has a first housing wall, and the protruding portion is disposed on the first housing wall. This helps increase volume of the battery cell and allows the space in the accommodating box to accommodate battery cells with different shapes of outer contours, enables a more compact arrangement of battery cells with different shapes of outer contours in the accommodating box, and helps increase energy density of the battery.

In some embodiments, the battery assembly further includes a busbar, the battery cell further includes terminal posts, the terminal posts are disposed on the first housing wall, the terminal posts of two of the battery cells are electrically connected by the busbar, the protruding portion includes the busbar, and at least part of the busbar is located in the accommodating space. This helps expand the space for arrangement of the busbar by utilizing the accommodating space, which further increases space utilization of the vehicle. On one hand, this allows the busbar to electrically connect more battery cells, thereby helping increase capacity of the battery. On the other hand, this facilitates more compact and regular arrangement of different battery cells in the accommodating box, helping increase energy density of the battery.

In some embodiments, at least part of each terminal post is accommodated in the accommodating space. This helps expand the space for arrangement of the terminal posts by utilizing the accommodating space, facilitates arrangement of a battery with higher capacity in the vehicle, and further increases space utilization of the vehicle.

In some embodiments, the first housing wall includes a protrusion, the protruding portion includes the protrusion, and at least part of the protrusion is located in the accommodating space. This helps further expand the space in the battery cell, thereby increasing capacity of the battery. Moreover, the support plate makes the internal structure of the vehicle more compact, increasing utilization of space inside the vehicle.

In some embodiments, the protrusion is provided with terminal posts. This helps increase utilization efficiency of the space in the protrusion in the accommodating space, enables a more compact arrangement of the battery and the support plate, helps increase the energy density and space utilization of the battery and increases utilization of space inside the vehicle.

In some embodiments, two terminal posts are provided and have opposite polarities, and the two terminal posts are disposed on the same protrusion. In this way, one protrusion may provide mounting positions for two terminal posts, which helps simplify manufacturing steps of the first housing wall and lower production costs.

In some embodiments, the protrusion is located at one end of the first housing wall in its length direction. In this way, a region at the other end of the first housing wall along its length direction that is away from the protrusion may have a maximum area, so that other components, having large outer contours, of the battery can be arranged in the region conveniently, facilitating arrangement of the other components of the battery. Besides, this helps reduce volume of the battery and increase utilization of space inside the battery, makes volume of the battery more compact, and helps increase total capacity of the battery in the vehicle.

In some embodiments, two terminal posts are provided and have opposite polarities, and the two terminal posts are disposed on two protrusions respectively. Thus, this helps reduce volume of a single protrusion, makes the structure more compact, and helps reduce volume of the battery cell, thereby facilitating arrangement of more battery cells in the battery and increasing total capacity of the battery in the vehicle. Moreover, this helps separate the two terminal posts, reduces the risk of short circuits between the two terminal posts and improves safety of the battery cell.

In some embodiments, the two protrusions are located at either end of the first housing wall in its length direction. This helps form a large-area flat region on the part, between the two protrusions, of the first housing wall, so that other components, having large outer contours, of the battery can be arranged in the region conveniently in response to a fixed volume of the battery, facilitating arrangement of the other components of the battery. Moreover, this helps reduce volume of the battery, increase utilization of space inside the battery and make volume of the battery more compact, and thus helps increase total capacity of the battery in the vehicle.

In some embodiments, the protrusion is located at the center of the first housing wall in its length direction. This facilitates the structural symmetry of the battery cell relative to a first central plane, enabling the adjustment of orientation when arranging a plurality of battery cells in the battery so that the battery cells can be well mounted in the battery.

Alternatively, the center of the first housing wall in its width direction coincides with the center of the protrusion in the width direction of the first housing wall. This further helps form a large-area flat region on the first housing wall in the width direction, so that other components, having large outer contours, of the battery can be arranged in the region conveniently, facilitating arrangement of the other components of the battery. Moreover, this helps reduce volume of the battery, increase utilization of space inside the battery and make volume of the battery more compact, and thus helps increase total capacity of the battery in the vehicle.

In some embodiments, the two terminal posts are spaced apart in the length direction of the first housing wall, thereby maximizing the distance between the two protrusions. This helps form a large-area flat region on the part, between the two protrusions, of the first housing wall, so that other components, having large outer contours, of the battery can be arranged in the region conveniently in response to a fixed volume of the battery, facilitating arrangement of the other components of the battery. Moreover, this helps reduce volume of the battery and increase utilization of space inside the battery, thereby increasing utilization of space inside the vehicle.

Alternatively, the two terminal posts are spaced apart in the width direction of the first housing wall. In this way, the two terminal posts are arranged in the length direction of the first housing wall, which helps shorten the distance between the two terminal posts of opposite polarities in two adjacent battery cells, facilitating electrical connection between two different adjacent battery cells, and further helping reduce the size of the battery.

In some embodiments, the battery cell further includes an electrode assembly, the electrode assembly is accommodated in the housing, a portion of the first housing wall is recessed to form an avoidance recess, the avoidance recess is located on a side of the protrusion close to the electrode assembly, and a portion of the electrode assembly is located in the avoidance recess. In this way, the first housing wall is allowed to approach the electrode assembly as close as possible, so that internal volume of the housing can be reduced effectively while allowing as much of the electrode assembly as possible to extend into the avoidance recess, thereby helping reduce redundant volume in the battery cell, making internal space of the battery cell more compact, and thus helping reduce total volume and the size of the outer contour of the battery cell, and helping increase the number of the battery cells that can be accommodated in the battery and increase the energy density and space utilization of the battery.

In some embodiments, the electrode assembly includes a main body and tabs, the tabs being disposed at a side edge of the main body and electrically connected to the main body, and at least part of each tab being located in the avoidance recess.

In some embodiments, at least a portion of each tab is located in the accommodating space, which helps further increase volume of the main body in the battery cell, thereby increasing energy density of the battery cell.

In some embodiments, the battery cell further includes terminal posts disposed on the first housing wall, the electrode assembly further includes adapters, the tabs are electrically connected to the terminal posts via the adapters respectively, and at least part of each tab is located in the accommodating space, which helps further increase volume of the main body in the battery cell, thereby increasing energy density of the battery cell.

Alternatively, at least part of the adapter is located in the accommodating space. This helps increase the space for arranging the adapter to provide more space for arrangement of the main body, thereby increasing capacity of the battery cell.

In some embodiments, the battery assembly further includes a sampling member, at least a portion of which is accommodated in the accommodating space. This allows for an increase in the space available for arranging the sampling member by utilizing the accommodating space, thereby increasing the overall volume of the battery and further improving capacity of the battery in the vehicle.

Alternatively, the battery assembly further includes a battery management system, at least a portion of which is accommodated in the accommodating space. This allows for an increase in the space available for arranging the battery management system by utilizing the accommodating space, thereby increasing the overall volume of the battery and further improving capacity of the battery in the vehicle. The support plate having the accommodating space increases utilization of space inside the vehicle and makes the part of the battery located outside the accommodating space have a more regular shape.

Alternatively, the battery assembly further includes a relay, at least a portion of which is accommodated in the accommodating space. This allows for an increase in the space available for arranging the relay by utilizing the accommodating space, thereby increasing the overall volume of the battery and further improving capacity of the battery in the vehicle. The support plate having the accommodating space increases utilization of space inside the vehicle and makes the part of the battery located outside the accommodating space have a more regular shape.

Alternatively, the battery assembly further includes a high-voltage distribution unit, at least a portion of which is accommodated in the accommodating space. This allows for an increase in the space available for arranging the high-voltage distribution unit by utilizing the accommodating space, thereby increasing the overall volume of the battery and further improving capacity of the battery in the vehicle. The support plate having the accommodating space increases utilization of space inside the vehicle and makes the part of the battery located outside the accommodating space have a more regular shape.

Alternatively, the battery assembly further includes a high-voltage/low-voltage wiring harness, at least a portion of which is accommodated in the accommodating space. This allows for an increase in the space available for arranging the high-voltage/low-voltage wiring harness by utilizing the accommodating space and reduces bending of the high-voltage/low-voltage wiring harness, thereby increasing the overall volume of the battery and further improving capacity of the battery in the vehicle.

In some embodiments, the battery cell has a length not less than 350 mm. This facilitates the storage or release of sufficient electrical energy through electrochemical reactions between the electrode assembly and an electrolyte in the battery cell, ensuring that the total electrical energy of the battery meets requirements.

Alternatively, the battery cell has a width in the range of 5 mm to 50 mm. In this way, the battery cell has a suitable size that facilitates its handling and matches the accommodating box in different sizes better.

Alternatively, the battery cell has a height in the range of 80 mm to 200 mm. In this way, the battery cell has a suitable size that facilitates its handling and matches the accommodating box in different sizes better.

In some embodiments, the protruding portion in the accommodating space has a height in the range of 2 mm to 10 mm. In this way, utilization of the accommodating space can be increased.

In some embodiments, the vehicle further includes seats disposed on one side of the support plate where the raised portion is formed. This helps increase volume of the battery in the vehicle to increase capacity of the battery, thereby increasing range of the vehicle. Moreover, this allows a smooth wall of the accommodating box to face the ground surface, making a bottom surface of the vehicle smoother, reducing drag coefficient of the vehicle and increasing ground clearance of the vehicle, thereby reducing occurrence of the increased drag coefficient due to the raised portion and damage to the battery caused by collisions with road debris during traveling of the vehicle.

In some embodiments, in a projection perpendicular to a height direction of the vehicle, part or all of a projection of the raised portion is located within the projection range of the seats. In this way, the raised portion utilizes the space beneath the seats, reducing the probability of a passenger coming into contact with the raised portion during travel, thereby minimizing the intrusion of the raised portion into the passenger's normal activity space, improving user experience, and increasing utilization of space inside the vehicle.

In some embodiments, at least two seats are provided, a first gap is formed between the two adjacent seats in a width direction of the vehicle, the raised portion includes a first raised portion, and part or all of the first raised portion is located in the first gap. This allows the first raised portion to utilize space in the first gap, thereby reducing the probability of the passenger coming into contact with the first raised portion during travel while increasing volume of the battery, reducing interference from the first raised portion to the passenger's normal movements, and increasing utilization of space inside the vehicle.

In some embodiments, a plurality of seats are provided, the plurality of seats are divided into at least two rows spaced apart in a length direction of the vehicle, and the first raised portion extends along the length direction of the vehicle to the underside of the adjacent row of seats. This helps increase volume of the first raised portion to increase volume of the accommodating space in the first raised portion so as to increase volume of the battery and improve capacity of the battery.

In some embodiments, the raised portion includes a second raised portion extending along the length direction of the vehicle and located on a side of the seat on the support plate in a width direction of the vehicle. This reduces interference from the second raised portion to the passenger's leg and foot movements, thus improving passenger's experience.

In some embodiments, two second raised portions are provided, the two second raised portions are located at either end of the support plate in the width direction of the vehicle, and the seats are located between the two second raised portions. This helps increase space for the passenger's leg and foot movements, improving passenger's experience. Besides, arrangement of the second raised portion effectively utilizes edge space along the width of the vehicle.

In some embodiments, the second raised portion and the seats are spaced apart in the width direction of the vehicle. This helps increase space for the passenger's leg and foot movements, improving the user's riding experience.

Alternatively, part of the second raised portion is located beneath the seat. This helps reduce the size of the support plate in the width direction, making structure of the vehicle more compact.

In some embodiments, the raised portion includes a third raised portion extending along the width direction of the vehicle, a plurality of seats are provided, the plurality of seats are divided into at least two rows spaced apart in the length direction of the vehicle, and at least part of the third raised portion is located beneath the same row of seats. This allows the third raised portion to better utilize the space beneath the seats in the width direction of the vehicle, reduces the intrusion of the third raised portion into the space between two adjacent rows of seats, reduces interference with the passenger's movements, and thus improves the passenger's experience.

In some embodiments, each seats includes a seat body, at least part of the seat body is spaced apart from the support plate in the height direction of the vehicle to form a second gap, and at least part of the raised portion is located in the second gap and spaced apart from the seat body in the height direction of the vehicle. This reduces the probability of damage to the raised portion caused by pressure from the passenger sitting directly on due to direct contact between the raised portion and the seat body.

In some embodiments, the seat includes support legs, the seat body and the support plate are spaced apart in a vertical direction to form the second gap, and the support legs are connected between the seat body and the support plate. This allows the seat body and the raised portion to be spaced apart so that the seat body has a regular shape for easy arrangement. This also allows the passenger to extend his/her feet into the second gap, enabling the passenger to have more relaxed sitting postures and improving the ride comfort.

In some embodiments, a plurality of support legs are provided, the plurality of support legs are spaced apart in the width direction of the vehicle, and part or all of the raised portion is located between two adjacent support legs in the width direction of the vehicle. This allows for the use of space between two support legs for arrangement of the raised portion, helping increase utilization of space inside the vehicle and improving capacity of the battery.

In some embodiments, the seat body includes a cushion, and the raised portion is embedded in the cushion to support the seat body in the height direction of the vehicle. This helps simplify the seat structure, maximize utilization of space inside the seat, and reduce production costs.

In some embodiments, the accommodating box has one side open to form a first opening, the support plate covers the first opening to enclose an accommodating cavity, and the battery assembly is disposed in the accommodating cavity. This helps simplify structure of the vehicle to make arrangement of the support plate and the battery more compact, and helps increase capacity of the battery in response to a fixed volume of the interior space of the vehicle. Moreover, this allows for direct maintenance of the battery assembly through the first opening after the battery is detached from the vehicle.

In some embodiments, the raised portion includes a raised body and a first cap, the raised body is provided with a first through hole that is in communication with the accommodating space, and the first cap is detachably connected to the raised body to cover the first through hole. In this way, the part of the battery assembly in the accommodating space can be maintained in the interior space through the first opening and the first through hole by detaching the first cap when battery inspection and maintenance are required, and there is no need to detach the battery, which helps increase working space for maintenance personnel and thus improves the convenience of maintenance operations.

In some embodiments, the raised portion further includes a first sealing member, the first sealing member being disposed around the periphery of the first through hole, the first sealing member being sandwiched between the raised body and the first cap to seal between the raised body and the first cap. In this way, the seam space of the contact area between the raised body and the first sealing member as well as between the first cap and the first sealing member is reduced, thereby reducing the probability of external foreign objects entering the accommodating cavity to affect battery operation, prolonging service life of the battery, and facilitating safety in use of the battery.

In some embodiments, the first cap is mounted onto the raised body by threaded fasteners. Thus, the use of the threaded fasteners facilitates disassembly while enhancing the connection strength between the first cap and the raised body.

The first cap is slidably snap-fitted to the raised body. The sliding manner allows the first cap to open or close the first through hole more quickly, thereby improving the convenience in maintenance.

Alternatively, the first cap is hinged to the raised body. The pivoting manner allows the first cap to open or close the first through hole more quickly, thereby improving the convenience in maintenance.

In some embodiments, the battery includes a temperature control assembly sandwiched between the support plate and the battery assembly. In this way, the temperature control assembly absorbs heat generated during operation of the battery assembly to reduce working temperature of the battery assembly, thereby improving safety in use of the battery. Moreover, this also reduce heat transferred from the battery assembly to the support plate and irradiated into the interior space, makes better use of the advantage of large area of the support plate, expands the contact area between the temperature control assembly and the battery assembly, and improves the temperature control effect.

In some embodiments, the battery includes a first adhesive layer adhered between the support plate and an outer surface of the temperature control assembly. In this way, the relative position between the temperature assembly and the support plate is fixed, reducing the probability of friction damage caused by relative movement between the two.

Alternatively, the battery includes a third adhesive layer adhered between the temperature control assembly and an outer surface of the battery assembly. In this way, the relative position between the temperature control assembly and the battery assembly is fixed, reducing the probability of friction damage caused by relative movement between the two.

In some embodiments, the battery assembly further includes battery cells, each of the battery cells includes a housing, the housing has a first housing wall, the first housing wall includes a protrusion, at least part of the protrusion is located in the accommodating space, and the protrusion has a height not exceeding 77% of the height of the raised portion. On one hand, this enables the spacing between the protrusion and the accommodating space in the height direction of the battery to lower the probability of damage caused by direct contact between the two, and facilitates arrangement of other components of the battery assembly into the accommodating space. On the other hand, this allows the raised portion of an appropriate thickness to protect the protrusion better.

In some embodiments, the height of the protrusion accounts for 21% to 53% of the height of the raised portion. In this way, the size of the accommodating space can meet requirements for arranging other components of the battery assembly, and the raised portion has enough sufficient strength to protect the protrusion.

In some embodiments, the battery assembly includes battery cells, the battery cells include terminal posts, and the terminal posts of at least two of the battery cells are located in the same accommodating space. This facilitates electrical connection of the terminal posts of different battery cells within a single accommodating space, making structure of the battery more compact.

In some embodiments, the vehicle includes second insulating members disposed on an inner wall of the accommodating space. In this way, by utilizing the insulating properties of the second insulating members, the risk of contact between the battery assembly and the inner wall of the accommodating space can be reduced, thereby lowering the risk of charge transfer between the battery assembly and the support plate, and lowering the risk of short circuits and other problems during use of the battery.

In some embodiments, the battery assembly includes battery cells, the battery cells include terminal posts, and the second insulating members are disposed opposite the terminal posts, respectively. This reduces the probability of contact between the terminal posts and the support plate due to relative movement between the battery assembly and the support plate, thereby lowering the risk of short circuits of the battery cells caused by the contact between the terminal posts and the support plate.

In some embodiments, the battery assembly further includes a busbar, at least part of the busbar is located in the accommodating space, a distance between the inner wall of the accommodating space and the busbar in a first direction is not less than 1% of the dimension of the accommodating space in the first direction, where the first direction is perpendicular to the raising direction of the raised portion. This helps reduce the probability of the busbar coming into contact with the inner wall of the accommodating space, and reduces the probability of short circuits due to the busbar coming into contact with the support plate.

In some embodiments, the distance between the inner wall of the accommodating space and the busbar in the first direction accounts for 2% to 10% of the dimension of the accommodating space in the first direction. This further helps reduce the probability of the busbar coming into contact with the inner wall of the accommodating space.

In some embodiments, the accommodating box includes a first box wall, the first box wall being located on a side of the accommodating box facing the support plate, and a portion of the first box wall extending into the accommodating space. Therefore, on one hand, during separate transport of the battery, the first box wall provides protection for the battery assembly. On the other hand, the probability of contact between the battery assembly and the support plate is reduced, thereby lowering the risk of adverse effects on other components and people in the vehicle caused by issues such as battery leakage.

In some embodiments, the accommodating box includes a box body and a box cover, the first box wall forms the box cover, the box body has one side open to form a second opening, the box cover covers the second opening to form an accommodating cavity with the box body, and the battery assembly is disposed in the accommodating cavity. In this way, the box body and the box cover are assembled to form the accommodating box, and the accommodating box can be disassembled easily according to actual needs, thereby facilitating inspection and maintenance of the battery assembly.

In some embodiments, the first box wall includes a box wall body and a second cap, the box wall body is provided with a second through hole that is in communication with the accommodating cavity, and the second cap is detachably connected to the box wall body to cover the second through hole. In this way, with the battery separated from the vehicle, the battery assembly in the accommodating cavity can be maintained through the second through hole by detaching the second cap only, thereby improving the convenience and efficiency of maintenance.

In some embodiments, the box cover further includes a second sealing member disposed around the periphery of the second through hole, the second sealing member being sandwiched between the box wall body and the second cap to seal between the box wall body and the second cap. In this way, the seam space of the contact area between the box wall body and the second sealing member as well as between the second cap and the second sealing member is reduced, thereby reducing the probability of external foreign objects entering the accommodating cavity to affect operation of the battery assembly, prolonging service life of the battery, and facilitating safety in use of the battery.

In some embodiments, the second cap is mounted onto the raised body by threaded fasteners. Thus, the use of the threaded fasteners facilitates disassembly while enhancing the connection strength between the second cap and the box wall body.

The second cap is slidably snap-fitted to the box wall body. The sliding manner allows the second cap to open or close the second through hole more quickly, thereby improving the convenience in maintenance.

The second cap is hinged to the box wall body. The pivoting manner allows the second cap to open or close the second through hole more quickly, thereby improving the convenience in maintenance.

In some embodiments, the raised portion includes a raised body and a first cap, the raised body is provided with a first through hole that is in communication with the accommodating space, and the first cap is detachably connected to the raised body to cover the first through hole; and the second through hole is disposed opposite the first through hole. In this way, in the state where the first cap and the second cap are detached, the interior space, the accommodating space and the accommodating cavity are in communication with one another, and the accommodating space is disposed opposite the accommodating cavity, so that maintenance personnel can maintain the battery assembly directly in the interior space and do not need to detach the battery from the vehicle, thus improving the convenience of maintenance operations and improving working efficiency.

In some embodiments, the battery includes a temperature control assembly sandwiched between the first box wall and the battery assembly. In this way, the temperature control assembly absorbs heat generated during operation of the battery assembly to reduce working temperature of the battery assembly, thereby improving safety in use of the battery. Moreover, the temperature control assembly can radiates part of the heat directly through the box wall of the accommodating box to the external environment, increasing the heat dissipation area and improving temperature control effect.

In some embodiments, the battery includes a second adhesive layer adhered between the first box wall and an outer surface of the temperature control assembly. In this way, the relative position between the temperature assembly and the first box wall is fixed, reducing the probability of friction damage caused by relative movement between the two.

Alternatively, the battery includes a third adhesive layer adhered between the temperature control assembly and an outer surface of the battery assembly. In this way, the relative position between the temperature control assembly and the battery assembly is fixed, reducing the probability of friction damage caused by relative movement between the two.

In some embodiments, a portion of the first box wall protrudes to form a boss, at least part of the boss extends into the accommodating space, an accommodating portion is formed on a side of the boss facing away from the accommodating space, and a portion of the battery assembly is located in the accommodating portion. In this way, with the accommodating portion, a portion of the battery assembly is located in the accommodating space, the portion of the battery assembly in the accommodating space is protected by the boss, so that the probability of direct contact between the battery assembly and the support plate is reduced. Moreover, this allows the region of the first box wall where the protrusion is provided to have the same thickness as the other regions, thereby helping reduce the total size of the first box wall so as to reduce dimensions of the accommodating box, reduce the total volume of the battery, and increase the energy density and space utilization of the battery.

In some embodiments, the boss has a height not exceeding 98.5% of the height of the raised portion. This reduces the probability that the protrusion abuts against the inner wall of the accommodating space along its height direction to affect arrangement of the battery and the support plate.

In some embodiments, the boss has a height accounting for 33.3% to 53% of the height of the raised portion. This further reduces the probability of the boss abutting against the inner wall of the accommodating space in the height direction and makes the space in the accommodating part larger for accommodating the battery assembly.

In some embodiments, the battery assembly further includes battery cells, each of the battery cells includes a housing, the housing has a first housing wall, the first housing wall includes a protrusion, at least part of the protrusion is located in the accommodating portion, and the protrusion has a height not exceeding 77% of the height of the boss. On one hand, this enables the spacing between the protrusion and the accommodating portion in the height direction of the battery to lower the probability of damage caused by direct contact between the two, and also facilitates arrangement of other components of the battery assembly into the accommodating portion. On the other hand, this allows the first box wall of an appropriate thickness to protect the protrusion better.

In some embodiments, the height of the protrusion accounts for 36% to 53% of the height of the boss. This further reduces the probability of damage caused by direct contact between the two, which is more conducive to arranging other components of the battery assembly within the accommodating portion.

In some embodiments, the battery assembly includes a protruding portion, at least part of the protruding portion is located in the accommodating portion, and the protruding portion has a height not exceeding 94% of the height of the boss. This helps reduce the probability of the protruding portion abutting against the boss in the vertical direction, thus reducing the probability of damage caused by the abutting between the two.

In some embodiments, the height of the protruding portion accounts for 74% to 86% of the height of the boss. This further helps reduce the probability of the protruding portion abutting against the boss in the vertical direction and helps increase space utilization of the protruding portion to the accommodating portion.

In some embodiments, the battery assembly further includes a busbar, at least part of the busbar is located in the accommodating portion, and a distance between the inner wall of the accommodating portion and the busbar in a first direction is not less than 1% of the dimension of the accommodating portion in the first direction, where the first direction is perpendicular to the thickness direction of the first box wall. This helps reduce the probability of the busbar coming into contact with the inner wall of the accommodating portion to result in short circuits, enabling the battery assembly to function properly.

In some embodiments, the distance between the inner wall of the accommodating portion and the busbar in the first direction accounts for 2% to 10% of the dimension of the accommodating portion in the first direction. This further helps reduce the probability of the busbar coming into contact with the inner wall of the accommodating portion to result in short circuits.

In some embodiments, the battery assembly includes battery cells, the battery cells include terminal posts, and the terminal posts of at least two of the battery cells are located in the same accommodating portion. This facilitates electrical connection between the terminal posts of different battery cells within a single accommodating portion, making structure of the battery more compact.

In some embodiments, the battery includes first insulating members disposed on the inner wall of the accommodating portion. In this way, the risk of contact between the battery assembly and the inner wall of the accommodating portion can be reduced, thereby lowering the risk of charge transfer between the battery assembly and the first box wall, and lowering the risk of short circuits and other problems during use of the battery.

In some embodiments, the battery assembly includes battery cells, the battery cells include terminal posts, and the first insulating members are disposed opposite the terminal posts, respectively. This reduces the probability of contact between the terminal posts and the first box wall due to relative movement between the battery assembly and the first box wall, thereby lowering the risk of short circuits of the battery cells caused by the contact between the terminal posts and the first box wall.

In some embodiments, the box cover includes a box wall body and a second cap, the box wall body is provided with a second through hole that is in communication with the accommodating cavity, the second cap is detachably connected to the box wall body to cover the second through hole, and part or all of the boss forms the second cap. This facilitates assembly and disassembly of the boss, thereby facilitating inspection and maintenance of the battery assembly.

In some embodiments, a length direction of the boss is the same as a length direction of the accommodating cavity, and the boss and the accommodating cavity have the same dimension in the length direction. This helps maximize the dimension of the accommodating portion in a length direction of the battery, thereby making it easier for the size and volume of the accommodating portion to adapt to battery assemblies of various sizes and shapes.

Alternatively, the length direction of the boss is the same as a width direction of the accommodating cavity, and the boss has a length equal to the width of the first box wall. This helps maximize the dimension of the accommodating portion in the width direction of the battery, thereby making it easier for the size and volume of the accommodating portion to adapt to battery assemblies of various sizes and shapes.

In some embodiments, the boss has a width not exceeding 500mm. Thus, this allows the first box wall to have a large flat region on its surface to fit with other components in the vehicle, thereby reducing the adverse impact of the boss on arrangement of other components in the vehicle. Moreover, this also reduce the adverse impact of reduced structural strength of the boss caused by its large width, and reduces the probability of damage to the components in the accommodating portion caused by deformation of the boss.

Alternatively, the boss has a height not exceeding 300mm. This facilitates compatibility with other components in the vehicle, minimizing the adverse impact of the boss on arrangement of other components in the vehicle. This also reduces the probability that the boss is deformed or bent due to shear stress perpendicular to the height direction to cause damage to the battery assembly in the accommodating portion.

In some embodiments, the boss has a width in the range of 50 mm to 300 mm. In this way, the space in the accommodating portion can meet arrangement requirements for the battery assembly.

Alternatively, the boss has a height in the range of 5 mm to 100 mm. In this way, the space in the accommodating portion can meet arrangement requirements for the protruding portion.

In some embodiments, the raised portion has a width not exceeding 500 mm. In this way, the space in the accommodating portion can meet arrangement requirements for the battery assembly.

Alternatively, the raised portion has a height not exceeding 300mm. This facilitates compatibility with other components in the vehicle, minimizing the adverse impact of the boss on arrangement of other components in the vehicle. Moreover, this reduces the probability that the raised portion is deformed or bent due to shear stress perpendicular to the height direction to cause damage to the battery assembly in the accommodating portion.

Embodiments of the present disclosure further provide a battery for a vehicle, where the vehicle includes a support plate, the battery is located on one side of the support plate, the support plate has a raised portion facing away from the battery, an accommodating space is formed on a side of the raised portion facing the battery, the battery includes an accommodating box and a battery assembly, the battery assembly is accommodated in the accommodating box, the battery assembly includes a protruding portion configured to extend toward the support plate to enter the accommodating space, and in a projection plane perpendicular to a protruding direction of the protruding portion, part of a projection of the battery assembly is located outside a projection of the protruding portion.

This allows the battery to make better use of the space created by the raised portion, making the structure of the battery more compact and improving capacity of the battery in the vehicle.

In some embodiments, the accommodating box has a holding space, the battery assembly is disposed in the holding space, one side of the holding space is open to form a first opening, and the first opening is covered with the support plate. This helps simplify structures of the battery and the vehicle, makes arrangement of the support plate and the battery more compact, and helps increase capacity of the battery in response to a fixed volume of space inside the vehicle. Moreover, this allows for direct maintenance of the battery assembly through the first opening after the battery is detached from the vehicle.

In some embodiments, the battery includes a temperature control assembly disposed on a side of the battery assembly facing the first opening. In this way, the temperature control assembly absorbs heat generated during operation of the battery assembly to reduce working temperature of the battery assembly, thereby improving safety in use of the battery. Moreover, this also reduce heat transferred from the battery assembly to the support plate and irradiated into the interior space.

In some embodiments, the battery includes a first adhesive layer configured to adhere the support plate to an outer surface of the temperature control assembly. In this way, the relative position between the temperature assembly and the support plate is fixed, reducing the probability of friction damage caused by relative movement between the two.

Alternatively, the battery includes a third adhesive layer adhered between the temperature control assembly and an outer surface of the battery assembly. In this way, the relative position between the temperature control assembly and the battery assembly is fixed, reducing the probability of friction damage caused by relative movement between the two.

In some embodiments, the accommodating box includes a first box wall, the first box wall being located on one side of the accommodating box, and a portion of the first box wall being configured to extend into the accommodating space. Therefore, during separate transport of the battery, the first box wall provides protection for the battery assembly, thereby reducing the probability of damage to the battery assembly caused by collisions.

In some embodiments, the accommodating box includes a box body and a box cover, the first box wall forms the box cover, the box body has one side open to form a second opening, the box cover covers the second opening to form an accommodating cavity with the box body, and the battery is disposed in the accommodating cavity. In this way, the box body and the box cover are assembled to form the accommodating box, and the accommodating box can be disassembled easily according to actual needs, thereby facilitating installation of the battery assembly into the accommodating cavity and subsequent maintenance of the battery assembly.

In some embodiments, the first box wall includes a box wall body and a second cap, the box wall body is provided with a second through hole that is in communication with the accommodating cavity, and the second cap is detachably connected to the box wall body to cover the second through hole. In this way, the battery assembly in the accommodating cavity can be maintained through the second through hole by detaching the second cap only rather than detaching the box body and the box cover, thereby improving the convenience and efficiency of maintenance.

In some embodiments, the box cover further includes a second sealing member disposed around the periphery of the second through hole, the second sealing member being sandwiched between the box wall body and the second cap to seal between the box wall body and the second cap. In this way, the seam space of the contact area between the box wall body and the second sealing member as well as between the second cap and the second sealing member is reduced by means of the second sealing member, thereby reducing the probability of external foreign objects entering the accommodating cavity to affect operation of the battery assembly, prolonging service life of the battery, and facilitating safety in use of the battery.

In some embodiments, the second cap is mounted onto the raised body by threaded fasteners. Thus, the use of the threaded fasteners facilitates disassembly while enhancing the connection strength between the second cap and the box wall body.

The second cap is slidably snap-fitted to the box wall body. The sliding manner allows the second cap to open or close the second through hole more quickly, thereby improving the convenience in maintenance.

The second cap is hinged to the box wall body. The pivoting manner allows the second cap to open or close the second through hole more quickly, thereby improving the convenience in maintenance.

In some embodiments, one of outer surfaces of two opposite sides of a portion of the first box wall protrudes to form a boss while the other one forms an accommodating portion, at least part of the boss is configured to extend into the accommodating space, and a portion of the battery assembly is located in the accommodating portion. In this way, with the accommodating portion, a portion of the battery assembly is located in the accommodating space, the portion of the battery assembly in the accommodating space is protected by the boss, so that the probability of direct contact between the battery assembly and the support plate is reduced. Moreover, this allows the region of the first box wall where the protrusion is provided to have the same thickness as the other regions, thereby helping reduce the total size of the first box wall so as to reduce dimensions of the accommodating box, reduce the total volume of the battery, and increase the energy density and space utilization of the battery.

In some embodiments, the box cover includes a box wall body and a second cap, the box wall body is provided with a second through hole that is in communication with the accommodating cavity, the second cap is detachably connected to the box wall body to cover the second through hole, and part or all of the boss forms the second cap. This facilitates assembly and disassembly of the boss, thereby facilitating inspection and maintenance of the battery assembly.

### BRIEF DESCRIPTION OF DRAWINGS

FIG. 1 is a schematic diagram of a vehicle according to an embodiment of the present disclosure;
FIG. 2 is a schematic diagram of a battery and a support plate in a vehicle according to a first embodiment of the present disclosure;
FIG. 3 is a partially enlarged schematic diagram of part A in FIG. 2;
FIG. 4 is an exploded diagram of the battery and the support plate in the embodiment shown in FIG. 2;
FIG. 5 is a cross-sectional diagram of the battery and the support plate in the embodiment shown in FIG. 2;
FIG. 6 is a partially enlarged schematic diagram of part B in FIG. 5;
FIG. 7 is a schematic diagram of a battery and a support plate in a vehicle according to a second embodiment of the present disclosure;
FIG. 8 is a partially enlarged schematic diagram of part C in FIG. 7;
FIG. 9 is a schematic diagram of the battery and a base plate in the embodiment shown in FIG. 7;
FIG. 10 is an exploded diagram of FIG. 9;
FIG. 11 is a cross-sectional diagram of FIG. 9;
FIG. 12 is a partially enlarged schematic diagram of part D in FIG. 11;
FIG. 13 is a schematic diagram of a battery according to a third embodiment of the present disclosure;
FIG. 14 is a cross-sectional diagram along line E-E in FIG. 13;
FIG. 15 is an enlarged schematic diagram of part F in FIG. 14;
FIG. 16 is an exploded diagram of the embodiment shown in FIG. 13;
FIG. 17 is a schematic diagram of a battery cell according to a fourth embodiment of the present disclosure;
FIG. 18 is a schematic diagram of a battery cell according to a fifth embodiment of the present disclosure;
FIG. 19 is a schematic diagram of a battery cell according to a sixth embodiment of the present disclosure;
FIG. 20 is a schematic diagram of a battery cell according to a seventh embodiment of the present disclosure from a first angle;
FIG. 21 is a schematic diagram of the battery cell in FIG. 20 from a second angle;
FIG. 22 is a schematic diagram of the battery cell in FIG. 20 from a third angle;
FIG. 23 is an exploded diagram of a battery according to an eighth embodiment of the present disclosure;
FIG. 24 is a schematic diagram of arrangement of a battery and seats according to a ninth embodiment of the present disclosure from a fourth angle;
FIG. 25 is a schematic diagram of arrangement of the embodiment shown in FIG. 24 from a fifth angle;
FIG. 26 is a schematic diagram of arrangement of the embodiment shown in FIG. 24 from a sixth angle;
FIG. 27 is a schematic diagram of arrangement of a battery and seats according to a tenth embodiment of the present disclosure from a seventh angle;
FIG. 28 is a schematic diagram of the embodiment shown in FIG. 27 from an eighth angle;
FIG. 29 is a schematic diagram of arrangement of a battery and seats according to an eleventh embodiment of the present disclosure;
FIG. 30 is a schematic diagram of arrangement of a battery and seats according to a twelfth embodiment of the present disclosure from a ninth angle;
FIG. 31 is a schematic diagram of arrangement of the embodiment shown in FIG. 30 from a tenth angle;
FIG. 32 is a schematic diagram of arrangement of the embodiment shown in FIG. 31 from an eleventh angle;
FIG. 33 is a schematic diagram of arrangement of a battery and seats according to a thirteenth embodiment of the present disclosure from a twelfth angle;
FIG. 34 is a schematic diagram of arrangement of the embodiment shown in FIG. 33 from a thirteenth angle;
FIG. 35 is a schematic diagram of arrangement of the embodiment shown in FIG. 33 from a fourteenth angle;
FIG. 36 is a schematic diagram of a battery and a support plate according to a fourteenth embodiment of the present disclosure;
FIG. 37 is a cross-sectional diagram along line G-G in FIG. 36;
FIG. 38 is a partially enlarged schematic diagram of part H in FIG. 37;
FIG. 39 is an exploded diagram of the embodiment shown in FIG. 36;
FIG. 40 is a partially enlarged cross-sectional diagram of a battery and a support plate according to a fifteenth embodiment of the present disclosure, with the enlarged cross-section position corresponding to part H in FIG. 37;
FIG. 41 is a schematic diagram of a battery and a support plate according to a sixteenth embodiment of the present disclosure;
FIG. 42 is a cross-sectional diagram along line I-I in FIG. 40;
FIG. 43 is a partially enlarged schematic diagram of part J in FIG. 41;
FIG. 44 is an exploded diagram of the embodiment shown in FIG. 40;
FIG. 45 is a partially enlarged cross-sectional diagram of a battery and a support plate according to a seventeenth embodiment of the present disclosure, with the enlarged cross-section position corresponding to part H in FIG. 41.

### Description of Reference Numerals

100. vehicle; 100a. interior space; 10. battery; 11. accommodating box; 11a. accommodating cavity; 11b. accommodating portion; 11c. first opening; 11d. holding space; 111. first box wall; 1111. boss; 1112. box wall body; 1112a. second through hole; 1112b. mounting step; 1113. second cap; 1114. second sealing member; 112. box body; 112a. second opening; 12. battery assembly; 12a. protruding portion; 121. battery cell; 1211. housing; 1212. first housing wall; 1212a. first central plane; 1212b. second central plane; 1212c. avoidance recess; 1213. terminal post; 1214. protrusion; 1214a. third central plane; 1214b. fourth central plane; 1215. electrode assembly; 1216. main body; 1217. tab; 1218. adapter; 122. busbar; 123. sampling member; 124. battery management system; 125. relay; 126. high-voltage distribution unit; 127. high-voltage/low-voltage wiring harness; 13. first adhesive layer; 14. temperature control assembly; 15. second adhesive layer; 16. third adhesive layer; 17. first insulating member; 18. second insulating member; 20. seat; 20a. first gap; 20b. second gap; 21. seat body; 211. cushion; 212. frame; 22. backrest; 23. support leg; 30. controller; 40. motor; 50. support plate; 51. raised portion; 51a. accommodating space; 51b. first raised portion; 51c. second raised portion; 51d. third raised portion; 511. raised body; 511a. first through hole; 512. first cap; 513. first sealing member.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

Unless otherwise defined, all technical and scientific terms used herein have the same meanings as commonly understood by those skilled in the technical field to which the present disclosure belongs. The terms used herein are intended only for the purpose of describing specific embodiments and are not intended to limit the present disclosure. The terms "include" and "have" and any variations thereof in the specification of the present disclosure and in the above BRIEF DESCRIPTION OF DRAWINGS are intended to encompass non-exclusive inclusion.

At present, new energy batteries are increasingly used in daily life and industry. The new energy batteries are not only used in energy storage power systems such as hydropower, thermal power, wind power and solar power stations, but also widely used in electric vehicles such as electric bicycles, electric motorcycles, and electric vehicles, as well as aerospace and other fields.

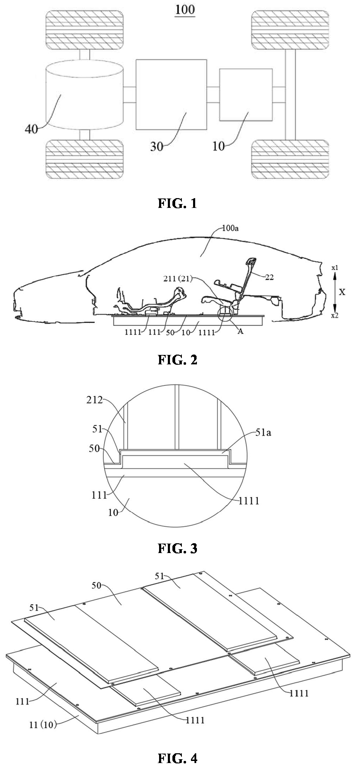

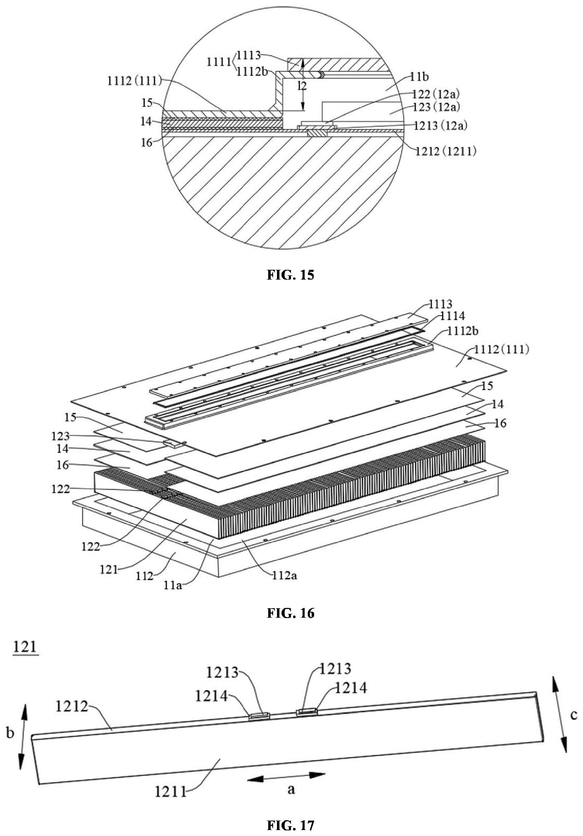

FIG. 1 is a schematic structural diagram of a vehicle 100 according to an embodiment of the present disclosure. The vehicle 100 may be a fuel vehicle, a gas vehicle, or a new energy vehicle. The new energy vehicle may be an all-electric vehicle, a hybrid vehicle, an extended-range electric vehicle, etc. As shown in FIG. 17, the vehicle 100 is provided with a battery 10 inside, and the battery 10 may be disposed at the bottom or head or tail of the vehicle 100. The battery 10 may be used as a power supply for the vehicle 100, for example, the battery 10 may be used as an operating power source for the vehicle 100. The vehicle 100 may further include a controller 30 and a motor 40. The controller 30 is configured to control the battery 10 to supply power to the motor 40, for example, to supply power for starting, navigation and driving of the vehicle 100.

In some embodiments of the present disclosure, the battery 10 may not only be used as an operating power source for the vehicle 100, but also as a driving power source for the vehicle 100, to replace or partially replace fuel or natural gas to provide driving power for the vehicle 100.

In an embodiment of the present disclosure, the battery may be a battery cell. The battery cell refers to a basic unit that enables mutual conversion of chemical energy and electric energy, and may be used for manufacturing a battery module or a battery pack so as power the vehicle 100. The battery cell may be a secondary battery, and the secondary battery refers to a battery cell that may be used continually by activating an active material by means of charging after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

The battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and may play a role in preventing a short circuit between the positive electrode and the negative electrode while allowing active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be in a liquid state, a gel state or a solid state.

In some embodiments, the battery cell may include a shell. The shell is configured to encapsulate components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a multi-prism battery. For example, the multi-prism battery may be a hexagonal prism battery, or the like, which is not specifically limited in the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or more end covers may also be provided.

In some embodiments, the shell is provided with at least one electrode terminal, and the electrode terminal is electrically connected to a tab. The electrode terminal may be directly connected to the tab, or may also be indirectly connected to the tab through an adapter. The electrode terminal may be arranged on the end cover, or may also be arranged on the case. In some embodiments, the shell is provided with a pressure relief mechanism. The pressure relief mechanism is configured to release the internal pressure of the battery cell.

The battery mentioned in the embodiments of the present disclosure is a single physical module (e.g., battery module or battery pack) that includes one or more battery cells for providing higher voltage and capacity. When a plurality of battery cells are provided, the plurality of battery cells are connected in series, in parallel, or in series-parallel through busbars.

In the description of the embodiments of the present disclosure, the technical terms such as "first", "second" and "third" are used only to distinguish between different objects, and shall not to be understood as an indication or implication of relative importance or implicit indication of the number, the particular oder, or the primary and secondary relation of the indicated technical features. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates an "or" relationship between the associated objects.

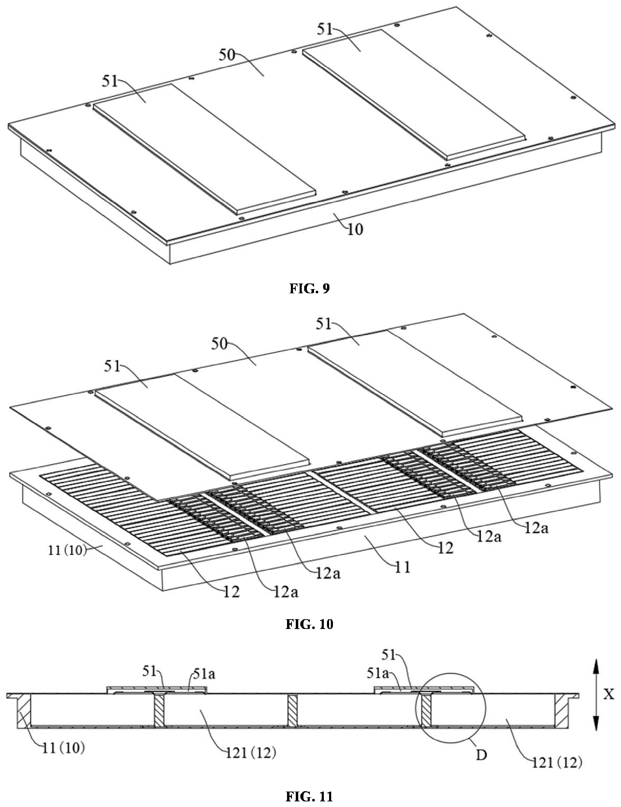

In the description of the embodiments disclosed herein, for illustrative purposes, as shown in FIGS. 2, 5, 7, 11, 13, 14, 24, 36, 37, 41 and 42, the direction indicated by an arrow X is defined as "a height direction of the battery" and "a height direction of the vehicle"; the direction indicated by x1 is defined as "top", and the direction indicated by x2 is defined as "bottom"; the direction indicated by an arrow Y is defined as "a length direction of the battery" and "a length direction of the vehicle"; and the direction indicated by an arrow Z is defined as "a width direction of the battery" and "a width direction of the vehicle". As shown by the arrows in FIGS. 17 to 22, the direction indicated by an arrow a is "a length direction of the battery cell" and "a length direction of the first housing wall"; the direction indicated by an arrow b is "a width direction of the battery cell" and "a width direction of the first housing wall"; and the direction indicated by an arrow c is "a height direction of the battery cell".

In the description of the embodiments of the present disclosure, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

In the following, the embodiments of the present disclosure will be described in detail.

In the related art, a vehicle is provided with a support plate. Interior space is formed on the top side of the support plate and is used for holding various components and goods in the vehicle and for accommodating passengers. The support plate plays a role in load bearing.

A battery is disposed on a side of the support plate away from the interior space. This allows the support plate to separate the battery from the interior space, reducing the probability of damage to people and objects in the interior space if the battery malfunctions. Moreover, the large area of the support plate provides a large area for arrangement of the battery, facilitating installation of a battery with higher capacity.

Due to the different shapes and sizes of components disposed in the interior space, vacant space which has not been used is created in the interior space, which adversely affects utilization of the interior space. Moreover, in order to increase capacity of the battery of the vehicle while maintaining the total volume of the vehicle constant, it is necessary to further increase space utilization to increase capacity of the battery.

Based on this, embodiments of the present disclosure provides a vehicle. Since the vehicle is provided with a raised portion on a base plate and a portion of the battery is located in the raised portion, the vacant space of the interior space is reduced via the raised portion, thereby increasing utilization of space inside the vehicle and helping increase capacity of the battery.

Specifically, with reference to FIGS. 2 to 12, embodiments of the present disclosure provide a vehicle 100. The vehicle 100 includes a support plate 50 and a battery 10.

The support plate 50 has a raised portion 51, and the raised portion 51 forms an accommodating space 51a.

The battery 10 is disposed on a side of the support plate 50 where the accommodating space 51a is provided, the battery 10 includes an accommodating box 11 and a battery assembly 12, the battery assembly 12 is accommodated in the accommodating box 11, and a portion of the battery assembly 12 extends into the accommodating space 51a.

The support plate 50 is located at the bottom of the vehicle 100. The support plate 50 and other components in the vehicle 100, such as the vehicle body, collectively encloses an interior space 100a. The interior space 100a can be used for arrangement of functional components such as a controller 30 and a motor in the vehicle 100, to accommodate interior trim components, and to carry passengers and cargo. That is, the interior space 100a on one side of the support plate 50 may be an equipment compartment, passenger compartment or storage compartment of the vehicle 100. For example, in an embodiment where the interior space 100a on one side of the support plate 50 is the passenger compartment of the vehicle 100, the support plate 50 forms the floor of the passenger compartment.

The raised portion 51 protrudes from the top surface of the other parts of the support plate 50 in a thickness direction of the support plate 50.

The thickness direction of the support plate 50 may be a height direction of the vehicle 100.

The raised portion 51 is located on a side of the support plate 50 facing the interior space 100a. That is, the raised portion 51 protrudes toward the interior space 100a to achieve the purpose of utilizing the vacant space of the interior space 100a.

The raised portion 51 encloses the accommodating space 51a.

The side of the support plate 50 where the accommodating space 51a is provided may be the side of the support plate 50 facing away from the interior space 100a, referring to FIGS. 2 and 3.

The accommodating box 11, which forms the outer contour of the battery 10, is used to accommodate other components of the battery 10 besides the accommodating box 11, thereby providing space for the installation and fixing of other components. Moreover, it plays a role in sealing and protecting the battery 10, reducing the adverse effects on the normal operation of the battery 10 caused by collisions with external objects and the intrusion of foreign objects during handling and use.

The battery assembly 12 refers to various components of the battery 10 that enables charging and discharging functions of the battery 10.

The battery assembly 12 is located inside the accommodating box 11 so that the accommodating box 11 can protect and seal the battery assembly 12, enabling the battery assembly 12 to perform charging and discharging functions normally.

A portion of the battery assembly 12 extends into the accommodating space 51a. That is, since one side of the accommodating space 51a is open, the battery 10 can enter the accommodating space 51a through the open position of the accommodating space 51a until a portion of the battery assembly 12 enters the accommodating space 51a, so that the space in the raised portion 51 can be utilized for arrangement of the battery assembly 12.

According to the vehicle 100 in the embodiments of the present disclosure, since the support plate 50 is provided with the raised portion 51, the raised portion 51 is allowed to utilize vacant space of the interior space 100a, thereby increasing utilization of space inside the vehicle 100 and making the structure of the vehicle 100 more compact; moreover, the raised portion 51 forms the accommodating space 51a, which helps expand the space available in the vehicle 100 for arrangement of the battery assembly 12; furthermore, a portion of the battery assembly 12 extends into the accommodating space 51a, which increases capacity of the battery 10, or helps reduce the overall size of the vehicle 100 in response to a fixed capacity of the battery 10.

In some embodiments, the battery 10 is disposed beneath the support plate 50 such that the battery 10 can form a portion of a chassis of the vehicle 100 and the surface of the battery 10 forms a portion of the outer contour surface of the vehicle 100.

It can be understood that the outer contour of the battery assembly 12 is not regular due to the influence of the type, size, number and arrangements of various components in the battery assembly 12.

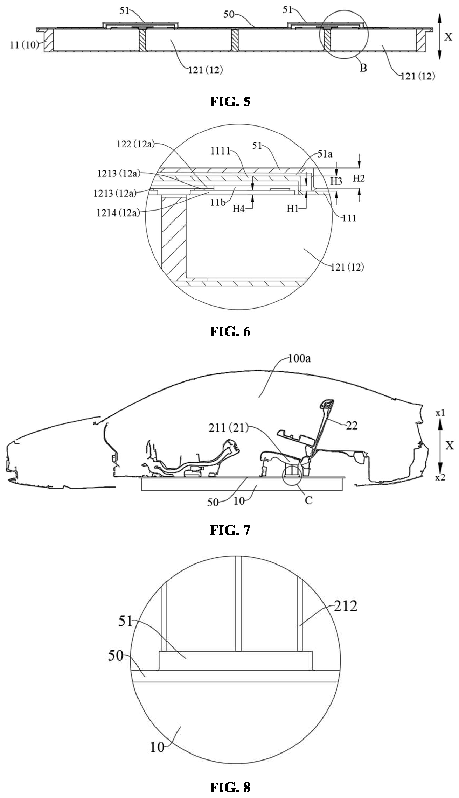

In some embodiments, with reference to FIGS. 5, 6, 11 and 12, the battery assembly 12 includes a protruding portion 12a, and at least part of the protruding portion 12a is accommodated in the accommodating space 51a.

The protruding portion 12a refers to, on the outer contour surface formed by the battery assembly 12, a portion that protrudes from other adjacent portions. It may be one or more components of the battery assembly 12, or it may be a partial structure of a component of the battery assembly 12.

This enables the part, located outside the accommodating space 51a, of the battery assembly 12 to have a regular-shaped outer contour, thereby enabling the accommodating box 11 that covers this part correspondingly to have a regular shape, enabling the part of the vehicle 100 formed with the accommodating box 11 to have a regular shape, and helping reduce drag coefficient. On one hand, this helps reduce the size of the accommodating box 11 and make structure of the battery 10 more compact; and on the other hand, this enables the part of the vehicle 100 formed with the accommodating box 11 to have a smoother outer contour, and helps decrease drag coefficient of the vehicle 100 and increase ground clearance of the vehicle 100, thereby reducing occurrence of the increased drag coefficient due to the accommodating box 11 and damage to the battery 10 caused by collisions with road debris during traveling of the vehicle 100.

In some embodiments, with reference to FIGS. 5, 6, 11 and 12, in a projection plane perpendicular to a raising direction of the raised portion 51, part of a projection of the battery assembly 12 is located outside a projection of the accommodating space 51a.

Part of the projection of the battery assembly 12 is located outside the projection of the accommodating space 51a, that is, a portion of the battery assembly 12 is located in the accommodating space 51a and another portion is located outside the accommodating space 51a.

This helps the battery assembly 12 utilize the space of one side of the support plate 50 better and helps increase capacity of the battery 10.

The specific method of forming the protruding portion 12a is not limited.

In some embodiments, with reference to FIGS. 17 to 20, the battery assembly 12 further includes a plurality of battery cells 121, each of the battery cells 121 includes a housing 1211, the housing 1211 has a first housing wall 1212, and the protruding portion 12a is disposed on the first housing wall 1212.

The housing 1211 encloses a space for accommodating the relevant components that carry out electrochemical reactions in the battery cell 121.

The housing wall refers to the physical structure of the respective wall surfaces that enclose the internal space of the housing 1211 and extend away from the enclosed space to the outer surface of the housing 1211.

The protruding portion 12a is disposed on the first housing wall 1212, meaning that the protruding portion 12a includes the area on the first housing wall 1212 that protrudes from other parts of the first housing wall 1212. That is, a portion of the first housing wall 1212 forms the protruding portion 12a. The specific type of this part is not limited. For example, it may be part or all of a protrusion 1214 formed on the outer surface of the first housing wall 1212 as described later. Alternatively, it may be other components of the battery assembly 12 other than the battery cell 121, such as a busbar 122 and a sampling member 123 as described later. Part or all of these components are located on the protruding portion 12a, and this part is provided on the first housing wall 1212. Alternatively, it may be a combination of the above two cases. For example, the protruding portion 12a may include the protrusion 1214 described above, terminal posts 1213 provided on the protrusion 1214 as described later, and the busbar 122 electrically connected to the terminal posts 1213, etc.

This helps increase volume of the battery cell 121 and allows the space in the accommodating box 11 to accommodate battery cells 121 with different shapes of outer contours, enables a more compact arrangement of battery cells 121 with different shapes of outer contours in the accommodating box 11, and helps increase energy density of the battery 10.

In some embodiments, with reference to FIGS. 6, 12, 14, 15, 40 and 45, the battery assembly 12 further includes a busbar 122, the battery cell 121 further includes terminal posts 1213, the terminal posts 1213 are disposed on the first housing wall 1212, the terminal posts 1213 of two of the battery cells 121 are electrically connected by the busbar 122, the protruding portion 12a includes the busbar 122, and at least part of the busbar 122 is located in the accommodating space 51a.

The busbar 122 is configured to electrically connect a plurality of battery cells 121 so that the battery cells 121 can be connected in series or in parallel.

The terminal posts 1213 penetrate the housing 1211 and are configured to be electrically connected to components that carry out electrochemical reactions in the battery cell 121, so that electrical energy can be output from or input into the battery cell 121 through the terminal posts 1213.

The protruding portion 12a includes at least a portion of the busbar 122, that is, part or all of the busbar 122 is accommodated in the accommodating space 51a.

This helps expand the space for arrangement of the busbar 122 by utilizing the accommodating space 51a, which further increases space utilization of the vehicle 100. On one hand, this allows the busbar 122 to electrically connect more battery cells 121, thereby helping increase capacity of the battery 10. On the other hand, this facilitates more compact and regular arrangement of different battery cells 121 in the accommodating box 11, helping increase energy density of the battery 10.

It should be noted that the specific structure of the busbar 122 and the methods for realizing the series or parallel connection between the battery cells 121 have been applied in the related art, which will not be repeated here.

It can be understood that the terminal posts 1213 may be flush with an outer surface of the housing 1211 such that the outer surface of the first housing wall 1212 is a complete surface; or, with reference to FIG. 15, the terminal posts 1213 may protrude from an outer surface of the first housing wall 1212.

It can be understood that the size of the housing 1211 has a direct impact on the size of the components that carry out electrochemical reactions in the battery cell 121, and thus affects energy density of the battery cell 121.

In some embodiments, with reference to FIGS. 6, 12, 14 and 15, at least part of each terminal post 1213 is accommodated in the accommodating space 51a.

That is, part or all of the terminal post 1213 is located in the accommodating space 51a, while part or all of the housing 1211 is located in the accommodating space 51a.

This helps expand the space for arrangement of the terminal posts 1213 by utilizing the accommodating space 51a, facilitates arrangement of a battery with higher capacity in the vehicle 100, and further increases space utilization of the vehicle 100.

In some embodiments, with reference to FIGS. 6, 17 to 22, 40 and 45, the first housing wall 1212 includes a protrusion 1214, the protruding portion 12a includes the protrusion 1214, and at least part of the protrusion 1214 is located in the accommodating space 51a. That is, the protrusion 1214 is a portion of the first housing wall 1212 and is partially or entirely located in the accommodating space 51a.

The protrusion 1214 is configured to help increase space inside the battery cell 121, increase internal volume of the battery cell 121 for accommodating the components that carry out electrochemical reactions, and increase energy density of the battery cell 121.

The protrusion 1214 is located within the accommodating space 51a. This helps further expand the space in the battery cell 121, thereby increasing capacity of the battery 10. Moreover, the support plate makes the internal structure of the vehicle 100 more compact, increasing utilization of space inside the vehicle 100.

In some embodiments, with reference to 6, 12, 14, 15, and 17 to 20, the protrusion 1214 is provided with the terminal posts 1213, that is, the terminal posts 1213 penetrate the protrusion 1214.

This helps increase utilization efficiency of the space in the protrusion 1214 in the accommodating space 51a, enables a more compact arrangement of the battery 10 and the support plate 50, helps increase the energy density and space utilization of the battery 10 and increases utilization of space inside the vehicle 100.

In some embodiments, with reference to FIGS. 17, 19 and 20, two terminal posts 1213 are provided and have opposite polarities, and the two terminal posts 1213 are disposed on the same protrusion 1214.

One terminal post 1213 serves as a positive electrode of the battery cell 121, and the other terminal post 1213 serves as a negative electrode of the battery cell 121.

In this way, one protrusion 1214 may provide mounting positions for two terminal posts 1213, which helps simplify manufacturing steps of the first housing wall 1212 and lower production costs.

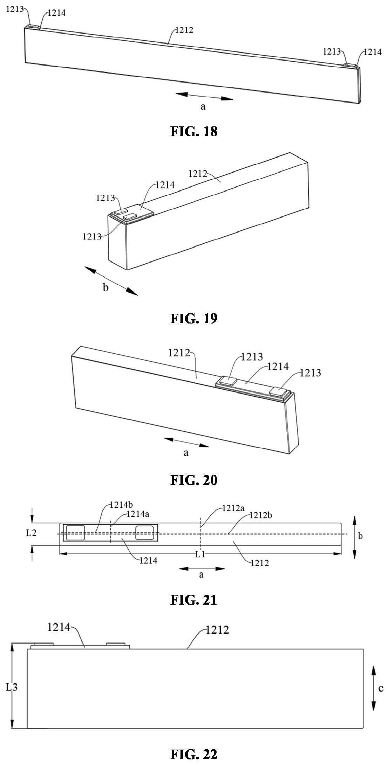

In some embodiments, with reference to FIGS. 19 and 20, the protrusion 1214 is located at one end of the first housing wall 1212 in its length direction.

The length direction of the first housing wall 1212 refers to a direction of extension of the largest dimension of the dimensions of the outer contour of the first housing wall 1212 when the outer contour of the first housing wall 1212 is in the shape of a cuboid.

In this way, a region at the other end, in the length direction, of the first housing wall 1212 that is away from the protrusion 1214 may have a maximum area, so that other components, having large outer contours, of the battery 10 can be arranged in the region conveniently, facilitating arrangement of the other components of the battery 10. Besides, this helps reduce volume of the battery 10 and increase utilization of space inside the battery 10, makes volume of the battery 10 more compact, and helps increase total capacity of the battery 10 in the vehicle 100.

In some embodiments, with reference to FIG. 18, two terminal posts 1213 are provided and have opposite polarities, and the two terminal posts 1213 are disposed on two protrusions 1214 respectively.

Thus, this helps reduce volume of a single protrusion 1214, makes the structure more compact, and helps reduce volume of the battery cell 121, thereby facilitating arrangement of more battery cells 121 in the battery 10 and increasing total capacity of the battery 10 in the vehicle 100. Moreover, this helps separate the two terminal posts 1213, reduces the risk of short circuits between the two terminal posts 1213 and improves safety of the battery cell 121.

In some embodiments, with reference to FIG. 18, the two protrusions 1214 are located at either end of the first housing wall 1212 in its length direction.

This helps form a large-area flat region on the part, between the two protrusions 1214, of the first housing wall 1212, so that other components, having large outer contours, of the battery 10 can be arranged in the region conveniently in response to a fixed volume of the battery 10, facilitating arrangement of the other components of the battery 10. Moreover, this helps reduce volume of the battery 10, increase utilization of space inside the battery 10 and make volume of the battery 10 more compact, and thus helps increase total capacity of the battery 10 in the vehicle 100.

In some embodiments, with reference to FIGS. 17 and 21, the protrusion 1214 is located at the center of the first housing wall 1212 in its length direction.

That is, a first central plane 1212a of the first housing wall 1212 along its length direction coincides with a third central plane 1214a of the protrusion 1214 along a length direction of the battery cell 121.

The first central plane 1212a refers to a reference plane that is perpendicular to the length direction of the first housing wall 1212 and located at half the length of the first housing wall 1212.

The third central plane 1214a refers to a reference plane perpendicular to a length direction of the protrusion 1214 and located at the half the length of the protrusion 1214.

This facilitates the structural symmetry of the battery cell 121 relative to the first central plane 1212a, enabling the adjustment of orientation when arranging a plurality of battery cells 121121 in the battery 10 so that the battery cells 121 can be well mounted in the battery 10.

It should be noted that, due to the influence of many factors in the manufacturing, processing, assembly, measurement and other production processes, the first central plane 1212a of the first housing wall 1212 along its length direction and the third central plane 1214a of the protrusion 1214 along the length direction of the battery cell 121 may not be consistent with the design dimensions after the battery cell 121 is manufactured, and accordingly the two cannot coincide. Therefore, the actual measurement of whether the first central plane 1212a and the third central plane 1214a coincide is based on the assumption of a certain preset range of error. That is, if a distance between the first central plane 1212a and the third central plane 1214a in the length direction of the first housing wall 1212 is within the preset range, they can be considered to coincide with each other. The specific values for the preset range are determined according to the design requirements.

In some embodiments, with reference to FIGS. 17 to 20, the center of the first housing wall 1212 in its width direction coincides with the center of the protrusion 1214 in the width direction of the first housing wall 1212.

That is, a second central plane 1212b of the first housing wall 1212 along its width direction coincides with a fourth central plane 1214b of the protrusion 1214 along the width direction of the battery cell 1212.

With reference to FIG. 21, the second central plane 1212b refers to a reference plane perpendicular to the width direction of the first housing wall 1212 and located at half the width of the first housing wall 1212. The fourth central plane 1214b refers to a reference plane perpendicular to the width direction of the first housing wall 1212 and located at half the width of the protrusion 1214.

This helps form a large-area flat region in the width direction of the first housing wall 1212, so that other components, having large outer contours, of the battery 10 can be arranged in the region conveniently, facilitating arrangement of the other components of the battery 10. Moreover, this helps reduce volume of the battery 10, increase utilization of space inside the battery 10 and make volume of the battery 10 more compact, and thus helps increase total capacity of the battery 10 in the vehicle 100.

It should be noted that, due to the influence of many factors in the manufacturing, processing, assembly, measurement and other production processes, the second central plane 1212b and the fourth central plane 1214b may not be consistent with the design dimensions after the battery cell 121 is manufactured, and accordingly they cannot coincide with each other. Therefore, the actual measurement of whether the second central plane 1212b and the fourth central plane 1214b coincide is based on the assumption of a certain preset range of error. That is, if a distance between the second central plane 1212b and the fourth central plane 1214b in the width direction of the first housing wall 1212 is within the preset range, they can be considered to coincide with each other. The specific values for the preset range are determined according to the design requirements. In some embodiments, with reference to FIGS. 17, 18, and 20, the two terminal posts 1213 are spaced apart in the length direction of the first housing wall 1212.

In this way, the distance between the two protrusions 1214 is maximized. This helps form a large-area flat region on the part, between the two protrusions 1214, of the first housing wall 1212, so that other components, having large outer contours, of the battery 10 can be arranged in the region conveniently in response to a fixed volume of the battery 10, facilitating arrangement of the other components of the battery 10. Moreover, this helps reduce volume of the battery 10 and increase utilization of space inside the battery 10, thereby increasing utilization of space inside the vehicle 100.

In some embodiments, with reference to FIG. 19, the two terminal posts 1213 are spaced apart in the width direction of the first housing wall 1212.

The width direction of the first housing wall 1212 refers to a direction perpendicular to the length direction, of the dimensions of the outer contour of the first housing wall 1212, when the outer contour of the first housing wall 1212 is in the shape of a cuboid.

It can be understood that the dimension of the first housing wall 1212 along its width direction is smaller than the dimension along its length direction. The battery 10 has a plurality of battery cells 121. The arrangement of the plurality of battery cells 121 along the width direction is conducive to reducing the maximum dimension of the outer contour formed by the plurality of battery cells 121.

In this way, the two terminal posts 1213 are spaced apart in the width direction of the first housing wall 1212. This helps shorten the distance between the two terminal posts 1213 of opposite polarities in two adjacent battery cells 121, facilitating electrical connection between two different adjacent battery cells 121, and further helping reduce the size of the battery 10.

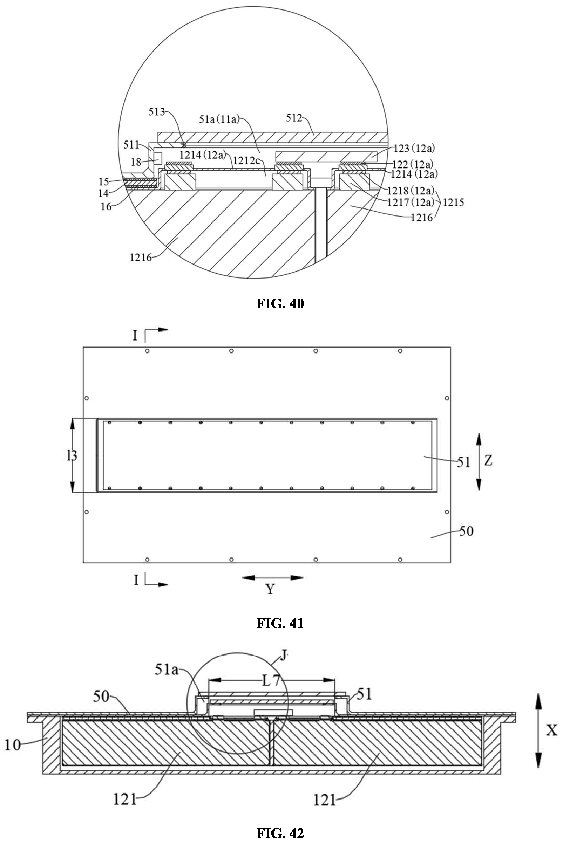

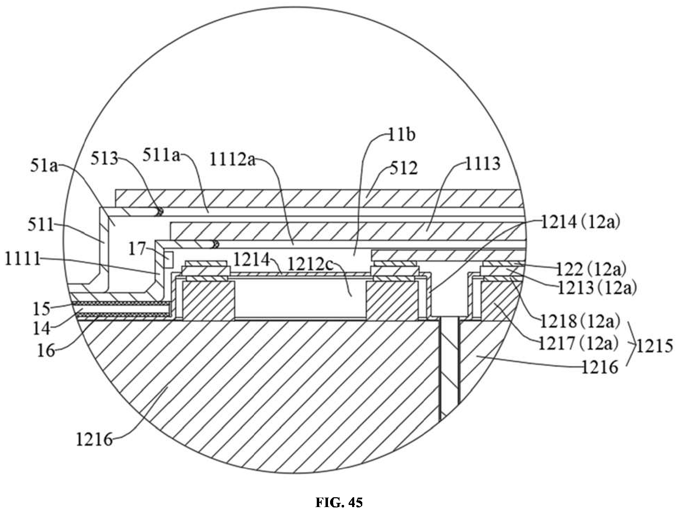

In some embodiments, with reference to FIGS. 40 and 45, the battery cell 121 further includes and electrode assembly 1215, the electrode assembly 1215 is accommodated in the housing 1211, a portion of the first housing wall 1212 is recessed to form an avoidance recess 1212c, the avoidance recess 1212c is located on a side of the protrusion 1214 close to the electrode assembly 1215, and a portion of the electrode assembly 1215 is located in the avoidance recess 1212c.

The housing 1211 provides the accommodating space 51a for the electrode assembly 1215 and protect it. Moreover, the housing 1211 is used for movement of the electrolyte to enable electrochemical reactions between the electrolyte and the electrode assembly 1215.

The first housing wall 1212 is provided with an avoidance region. The avoidance region is recessed on a side facing the electrode assembly 1215 to form the avoidance recess 1212c, and protrudes on a side facing away from the electrode assembly 1215 to form the protrusion 1214. The protrusion 1214 and the avoidance recess 1212c are disposed corresponding to each other.

A portion of the electrode assembly 1215 is located in the avoidance recess 1212c. In this way, in response to fixed dimensions of the first housing wall 1212, the first housing wall 1212 is allowed to approach the electrode assembly 1215 as close as possible, which effectively reduces internal volume of the housing 1211 while allowing as much of the electrode assembly 1215 as possible to extend into the avoidance recess 1212c, thereby helping reduce redundant volume in the battery cell 121, making internal space of the battery cell 121 more compact, and thus helping reduce total volume and the size of the outer contour of the battery cell 121, and helping increase the number of the battery cells 121 that can be accommodated in the battery 10 and increase the energy density and space utilization of the battery 10.

It can be understood that the battery cell 121 has at least a partial mounting cavity for holding the electrode assembly 1215, and the mounting cavity is in communication with the avoidance recess 1212c.

In some embodiments, with reference to FIGS. 15, 40 and 45, the electrode assembly 1215 includes a main body 1216 and tabs 1217, the tabs 1217 are disposed at a side edge of the main body 1216 and electrically connected to the main body 1216, and at least part of each tab 1217 is located in the avoidance recess 1212c.

The main body 1216, i.e., a jelly roll, is formed by stacking or winding a plurality of electrode plates. The tab 1217 forms the positive or negative electrode in the electrode assembly 1215.

At least part or all of the tab 1217 is located in the avoidance recess 1212c, which helps further increase volume of the main body 1216 in the battery cell 121, thereby increasing energy density of the battery cell 121.

It can be understood that the tab 1217 protrudes from one side of the main body 1216.

It can be understood that the main body 1216 directly participates in electrochemical reactions, and its volume directly affects capacity of the battery cell 121.

In some embodiments, with reference to FIGS. 15, 40 and 45, at least part of the tab 1217 is located in the accommodating space 51a. This helps increase the space for arranging the tab 1217, thereby allowing more space for arrangement of the main body 1216 to increase capacity of the battery cell 121.

In some embodiments where the electrode posts 1213 are provided, as shown in FIGS. 40 and 45, the electrode assembly 1215 further includes adapters 1218, where the tabs 1217 are electrically connected to the electrode posts 1213 via the adapters 1218 respectively, and at least part of each adapter 1218 is located in the accommodating space 51a.

The adapter 1218 is used for electrical connection between the terminal post 1213 and the tab 1217 and meets the requirements for electrical connection between terminal posts 1213 and the tabs 1217 of different sizes and specifications.

In this way, at least part or all of the adapter 1218 is located in the accommodating space 51a. This helps increase the space for arranging the adapter 1218 to provide more space for arrangement of the main body 1216, thereby increasing capacity of the battery cell 121.

It can be understood that in order to realize the charging and discharging functions of the battery cell 121, other auxiliary components are also provided in the battery 10, and arrangement of these auxiliary components also has an important impact on the better utilization of the space within the accommodating space 51a.

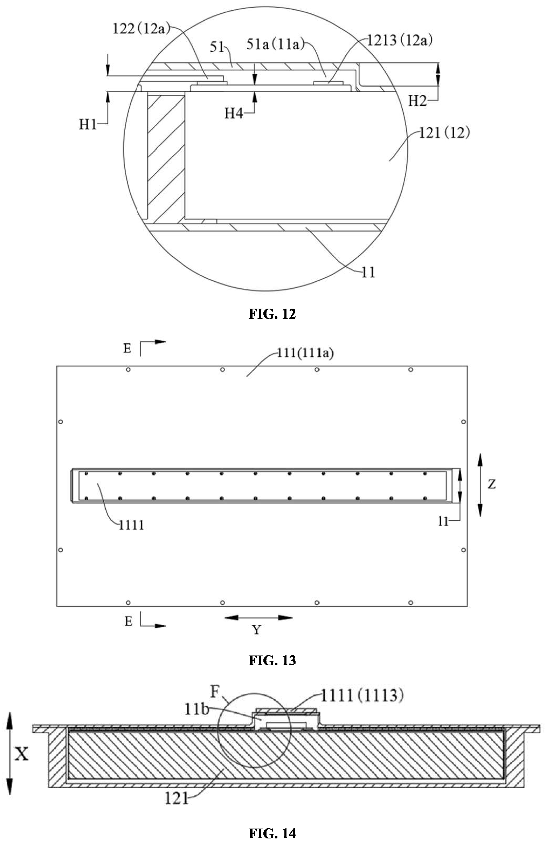

In some embodiments, with reference to FIGS. 14, 15, 16, 23, 38, 39, 43, and 44, the battery assembly 12 further includes a sampling member 123, and at least part of the sampling member 123 is accommodated in the accommodating space 51a.

The sampling member 123 is configured to acquire parameter information such as voltage and temperature of various components inside the battery 10, such as the battery cells 121, and transmit the acquired parameter information to a battery management system 124 (BMS) so that the battery management system 124 can reasonably implement different control strategies to enable charge and discharge of the battery 10 safely and efficiently.

That is, part or all of sampling member 123 is located in the accommodating space 51a.

This allows for an increase in the space available for arranging the sampling member 123 by utilizing the accommodating space 51a, thereby increasing the overall volume of the battery 10 and further improving capacity of the battery in the vehicle 100.

It should be noted that the specific structure of the sampling member 123 and the principles for acquiring different parameter information have already been applied in the related art, which will not be repeated here.

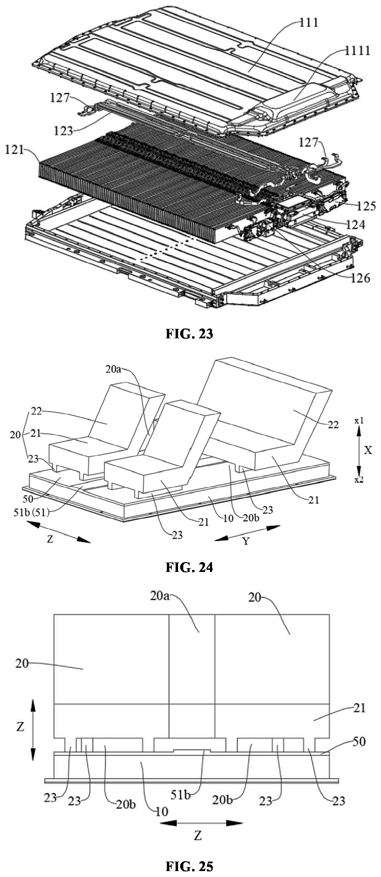

In some embodiments, with reference to FIG. 23, the battery assembly 12 further includes a battery management system 124, and at least part of the battery management system 124 is accommodated in the accommodating space 51a.

The battery management system 124 is configured to manage and control the various electrical devices in each battery 10, monitor the operating status of the battery 10, and adopt appropriate control strategies according to its operating status to prevent the battery 10 from overcharging and over-discharging, so as to prolong service life of the battery 10.

This allows for an increase in the space available for arranging the battery management system 124 by utilizing the accommodating space 51a, thereby increasing the overall volume of the battery 10 and further improving capacity of the battery 10 in the vehicle 100. The support plate having the accommodating space 51a increases utilization of space inside the vehicle 100 and makes the part of the battery 10 located outside the accommodating space 51a have a more regular shape.

In some embodiments, with reference to FIG. 23, the battery assembly 12 further includes a relay 125, and at least part of the relay 125 is accommodated in the accommodating space 51a.

The relay 125, when the battery 10 in the vehicle 100 needs to be charged or discharged, the relay 125 responds to a command from an electrical system to switch on or off the connection between the battery 10 and other electrical devices in the vehicle 100, so as to realize the transmission or interruption of electrical energy.

This allows for an increase in the space available for arranging the relay 125 by utilizing the accommodating space 51a, thereby increasing the overall volume of the battery 10 and further improving capacity of the battery 10 in the vehicle 100. The support plate having the accommodating space 51a increases utilization of space inside the vehicle 100 and makes the part of the battery 10 located outside the accommodating space 51a have a more regular shape.

In some embodiments, with reference to FIG. 23, the battery assembly 12 further includes a high-voltage distribution unit 126, and at least part of the high-voltage distribution unit 126 is accommodated in the accommodating space 51a.

The high-voltage distribution unit 126 is configured to monitor the high-voltage connection status and insulation status within battery 10 in real time, achieving management of high-voltage electrical safety within the battery 10.

This allows for an increase in the space available for arranging the high-voltage distribution unit 126 by utilizing the accommodating space 51a, thereby increasing the overall volume of the battery 10 and further improving capacity of the battery 10 in the vehicle 100. The support plate having the accommodating space 51a increases utilization of space inside the vehicle 100 and makes the part of the battery 10 located outside the accommodating space 51a have a more regular shape.

In some embodiments, with reference to FIG. 23, the battery assembly further includes a high-voltage/low-voltage wiring harness 127, and at least part of the high-voltage/low-voltage wiring harness 127 is accommodated in the accommodating space 51a.

The high-voltage/low-voltage wiring harness 127 is used for electrical connection of various components in the battery assembly 12 to transmit high-voltage/ low-voltage currents, enabling the transmission of electrical energy and control signals.

This allows for an increase in the space available for arranging the high-voltage/low-voltage wiring harness 127 by utilizing the accommodating space 51a and reduces bending of the high-voltage/low-voltage wiring harness 127, thereby increasing the overall volume of the battery 10 and further improving capacity of the battery 10 in the vehicle 100.

In some embodiments, with reference to FIG. 21, the battery cell 121 has a length not less than 350 mm (millimeter), i.g., L1 ≥ 350 mm. This facilitates the storage or release of sufficient electrical energy through electrochemical reactions between the electrode assembly and the electrolyte in the battery cell 121, ensuring that the total electrical energy of the battery 10 meets requirements.

The specific value of the length of the battery cell 121 is not limited, which may be, for example, 400 mm, 500 mm, 600 mm, 700 mm, 800 mm, 900 mm, 1000 mm, 1200 mm and 1500 mm.

The specific method of measuring the length of the battery cell 121 is not limited. For example, at a room temperature of 25°C (Celsius), the length of the battery cell 121 may be obtained by allowing a main scale and a vernier scale of a vernier caliper to abut against both ends of the battery cell 121 along the length direction and then reading data shown on the vernier caliper.

In some embodiments, with reference to FIG. 21, the battery cell 121 has a width in the range of 5 mm to 50 mm, i.e., 5 mm ≤ L2 ≤ 50 mm. In this way, the battery cell 121 has a suitable size that facilitates its handling and matches the accommodating box 11 in different sizes better.

The specific value of the width of the battery cell 121 is not limited, which may be, for example, 5 mm, 20 mm, 30 mm, 35 mm, 40 mm and 50 mm.

The specific method of measuring the width of the battery cell 121 is not limited. For example, at a room temperature of 25°C (Celsius), the width of the battery cell 121 may be obtained by allowing a main scale and a vernier scale of a vernier caliper to abut against both ends of the battery cell 121 along the width direction and then reading data shown on the vernier caliper.

In some embodiments, with reference to FIG. 22, the battery cell 121 has a height in the range of 80 mm to 200 mm, i.e., 80 mm ≤ L3 ≤ 200 mm. In this way, the battery cell 121 has a suitable size that facilitates its handling and matches the accommodating box 11 in different sizes better.

The specific value of the height of the battery cell 121 is not limited, which may be, for example, 80 mm, 100 mm, 120 mm, 150 mm, 180 mm and 200 mm.

The specific method of measuring the height of the battery cell 121 is not limited. For example, at a room temperature of 25°C (Celsius), the height of the battery cell 121 may be obtained by placing the battery cell 121 on a measurement reference plane, with the height direction of the battery cell 121 perpendicular to the measurement reference plane; aligning the zero mark of a ruler with one end of the battery cell 121 along the height direction, and then reading a mark that is aligned with the other end of the battery cell 121 along the height direction.

In some embodiments, with reference to FIG. 12, the protruding portion 12a in the accommodating space 51a has a height in the range of 2 mm to 10 mm. That is, with reference to FIG. 12, 2 mm ≤ H1 ≤ 10 mm.

The height of the protruding portion 12a refers to the dimension of the protruding portion 12a in the height direction of the battery 10.

In this way, the space utilization of the accommodating space 51a can be increased.

The specific value of the height of the protruding portion 12a is not limited, which may be, for example, 2 mm, 3 mm, 4 mm, 5 mm, 6 mm, 7 mm, 8 mm, 9 mm and 10 mm.

In some embodiments, with reference to FIGS. 2, 7, 24 to 35, the vehicle 100 further includes seats 20, and the seats 20 are disposed on a side of the support plate 50 where the raised portion 51 is formed.

The seats 20 are used for passengers of the vehicle 100 to sit on or place items.

That is, the interior space 100a on the side of the support plate 50 where the raised portion 51 is provided is a passenger compartment in the vehicle 100. In a passenger car, a passenger compartment has the largest volume of space in the vehicle 100. Correspondingly, the support plate 50 has the largest size, and the region available for arranging the battery 10 is maximized, which helps increase capacity of the battery 10 in the vehicle 100.

This helps increase volume of the battery 10 in the vehicle 100 to increase capacity of the battery 10, thereby increasing range of the vehicle 100. Moreover, this allows the smooth wall of the accommodating box 11 to face the ground surface, making the bottom surface of the vehicle 100 smoother, reducing drag coefficient of the vehicle 100 and increasing ground clearance of the vehicle 100, thereby reducing occurrence of the increased drag coefficient due to the raised portion 51 and damage to the battery 10 caused by collisions with road debris during traveling of the vehicle 100.

The drag coefficient refers to a parameter for describing the resistance an object encounters in a gas. Its value reflects the degree to which the shape of an object affects gas flow. The higher the drag coefficient, the greater the air resistance the object encounters during its movement. Therefore, the drag coefficient is directly related to the energy consumption of the vehicle 100 during traveling.

The ground clearance refers to a distance between the ground and a rigid object under the vehicle body during traveling of the vehicle 100. Its size directly affects passability of the vehicle 100.

In some embodiments, with reference to FIGS. 24 to 35, in a projection perpendicular to a height direction of the vehicle 100, part or all of a projection of the raised portion 51 is located within the projection range of the seats 20.

That is, at least part of the raised portion 51 is located in the space below the contact surface with the seats 20 when a passenger is seated.

It can be understood that when the passenger is seated in the seat 20, due to the passenger's sitting posture, the space beneath the contact surface with the seat 20 includes the seat 20 itself and the space below the seat 20, which will not be reached or difficult to be reached by the passenger's limbs.

In this way, the raised portion 51 utilizes the space beneath the seats 20, reducing the probability of the passenger coming into contact with the raised portion 51 during traveling, thereby minimizing the intrusion of the raised portion 51 into the passenger's normal activity space, improving user experience, and increasing utilization of space inside the vehicle 100.

It can be understood that there may be a plurality of seats 20, and the position of the raised portion 51 is adapted to arrangement relationship between the plurality of seats 20.

In some embodiments, with reference to FIGS. 24 to 26, 29 and 33, at least two seats 20 are provided, a first gap 20a is formed between the two adjacent seats 20 in a width direction of the vehicle 100, the raised portion 51 includes a first raised portion 51b, and part or all of the first raised portion 51b is located in the first gap 20a.

The width direction of vehicle 100 refers to a direction in which the dimension of the vehicle 100 is perpendicular to the length direction and the direction of gravity.

The direction of gravity refers to the vertical direction.

It can be understood that when the passenger is seated in the seat 20, due to the passenger's sitting posture, it is difficult for the passenger's legs to enter the first gap 20a.

This allows the first raised portion 51b to utilize space in the first gap 20a, thereby reducing the probability of the passenger coming into contact with the first raised portion 51b during travel while increasing volume of the battery 10, reducing interference from the first raised portion 51b to the passenger' normal movements, and increasing utilization of space inside the vehicle 100.

It can be understood that other apparatuses in the vehicle 100, such as armrests, car refrigerators, and storage boxes, can also be arranged in the first gap 20a to increase utilization of space inside the vehicle and improve the user experience.

In some embodiments, part of the projection of the first raised portion 51b is located within the projection range of the seats 20, while the other part is located within the first gap 20a.

In some embodiments, with reference to FIGS. 24, 26 and 33, a plurality of seats 20 are provided, the plurality of seats 20 are divided into at least two rows spaced apart in the length direction of the vehicle 100, and the first raised portion 51b extends along the length direction of the vehicle 100 to the underside of the adjacent row of seats 20.

The length direction of the vehicle 100 refers to a direction in which the dimension with the largest value among the dimensions of the vehicle 100 is located. Generally, the length direction of the vehicle 100 is also a forward or backward direction of the vehicle 100 when it travels in a straight line.

This helps increase volume of the first raised portion 51b to increase volume of the accommodating space 51a in the first raised portion 51b so as to increase volume of the battery 10 and increase capacity of the battery 10.

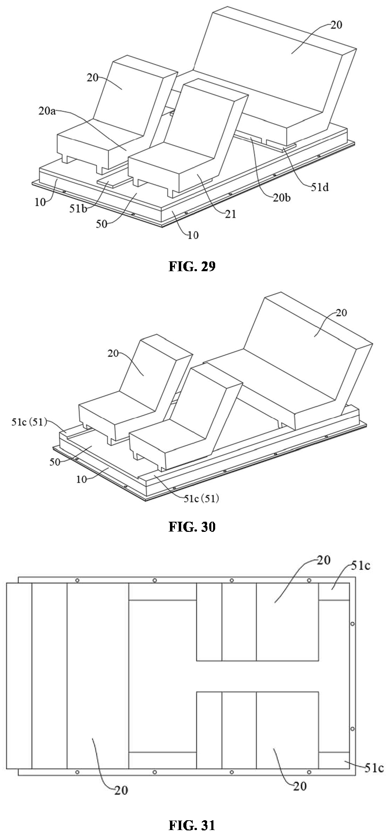

In some embodiments, with reference to FIGS. 30 to 35, the raised portion 51 includes a second raised portion 51c, and the second raised portion 51c extends along the length direction of the vehicle 100 and located on a side of the seat 20 on the support plate in the width direction of the vehicle 100.

This reduces the interference of the second raised portion 51c with the passenger' leg and foot movements, improving the passenger's experience.

In some embodiments, with reference to FIGS. 30 to 35, two second raised portions 51c are provided, the two second raised portions 51c are located at either end of the support plate 50 in the width direction of the vehicle 100, and the seats 20 are located between the two second raised portions 51c.

That is, the seats 20 are located in the region between the two second raised portions 51c.

This helps increase space for passenger's leg and foot movements, improving passenger's experience. Besides, arrangement of the second raised portions 51c effectively utilize edge space along the width of the vehicle 100.

In some embodiments, with reference to FIGS. 30 to 35, each second raised portion 51c extends in the length direction to two ends of the battery 10 along the length direction of the vehicle 100, thereby further increasing capacity of the battery 10.

In some embodiments, the second raised portions 51c and the seats 20 are spaced apart in the width direction of the vehicle 100.

This helps increase space for passenger's leg and foot movements, improving the user's riding experience.

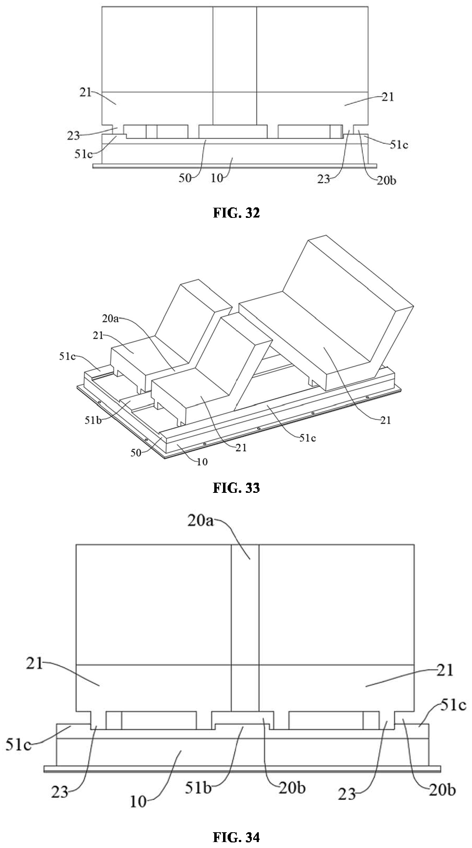

In some embodiments, with reference to FIGS. 32 and 34, part of each second raised portion 51c is located beneath the seat 20.

This helps reduce the size of the support plate 50 in the width direction, making structure of the vehicle 100 more compact.

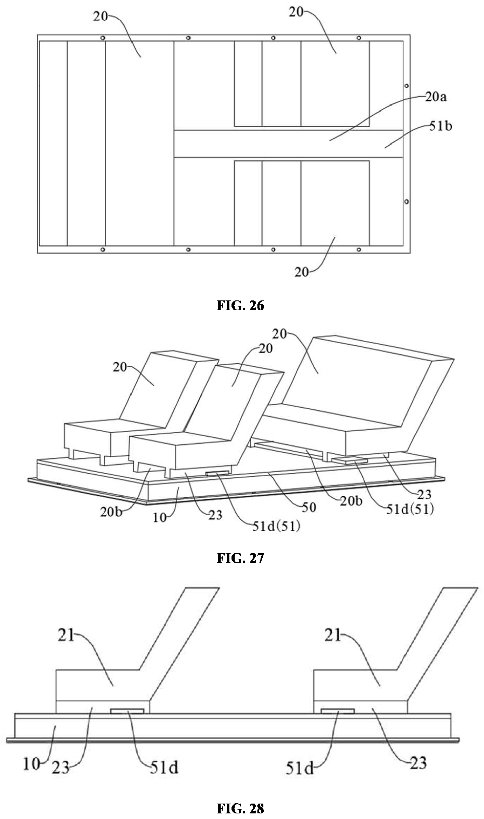

In some embodiments, with reference to FIGS. 27 to 29, the raised portion 51 includes a third raised portion 51d, where the third raised portion 51d extends along the width direction of the vehicle 100, a plurality of seats 20 are provided, the plurality of seats 20 are divided into at least two rows spaced apart in the length direction of the vehicle 100, and at least part of the third raised portion 51d is located beneath the same row of seats 20.

This allows the third raised portion 51d to make better use of the space under the seats 20 in the width direction of the vehicle 100, reduces the intrusion of the third raised portion 51d into the space between two adjacent rows of seats 20, reduces interference with passenger's movements, and thus improves passenger's experience.

In some embodiments where the first gap 20a is provided, a portion of the third raised portion 51d is located under the seats 20, while the other part thereof is located in the first gap 20a.

This allows the third raised portion 51d to make better use of the space under the seats 20 and the space in the first gap 20a, which helps increase space utilization of the battery 10 in the vehicle 100 and increase capacity of the battery 10.

It can be understood that a plurality of first gaps 20a are provided between the plurality of seats 20 spaced apart in the width direction of the vehicle 100, and the third raised portion 51d extends along the width direction of the vehicle 100 and passes through all the first gaps 20a and is located below each seat 20 in the same row to increase space utilization.

In some embodiments, with reference to FIGS. 2, 7, 24, 25, 29, 32 and 34, each seat 20 include a seat body 21, at least part of the seat body 21 is spaced apart from the support plate 50 in the height direction of the vehicle 100 to form a second gap 20b, and at least part of the raised portion 51 is located in the second gap 20b and spaced apart from the seat body 21 in the height direction of the vehicle 100.

The seats 21 are designed for passengers to sit on to support the weight of the passengers.

In this way, the probability of damage to the raised portion 51 caused by the sitting pressure from the passenger due to direct contact between the raised portion 51 and the seat body 21 can be reduced.

It can be understood that a portion of a bottom surface of the seat body 21 may form the second gap 20b with the support plate 50 in the height direction of the vehicle 100, while another portion may be in contact with the support plate 50; or the entire bottom surface of the seat body 21 may form the second gap 20b with the support plate 50 in the height direction of the vehicle 100, that is, the seat body 21 and the support plate 50 may be completely spaced apart in the height direction of the vehicle 100.

The specific method of forming the second gap 20b is not limited.

For example, with reference to FIGS. 24, 25, 27, 32 and 34, each seat 20 include support legs 23, each seat body 21 and the support plate 50 are spaced apart in the vertical direction to form the second gap 20b, and the support legs 23 are connected between the seat body 21 and the support plate 50.

This allows the seat bodies 21 and the raised portion 51 to be spaced apart so that the seat body 21 has a regular shape for easy arrangement. This also allows the passenger to extend his/her feet into the second gap 20b, enabling the passenger to have more relaxed sitting postures and improving the ride comfort.

It can be understood that the connection position between the support legs 23 and the support plate 50 is not limited; it may be located on the raised portion 51 or in other regions of the support plate 50 other than the raised portion 51.

In some embodiments, with reference to FIGS. 24, 25, 27, 32 and 34, a plurality of support legs 23 are provided, the plurality of support legs 23 are spaced apart in the width direction of the vehicle 100, and part or all of the raised portion 51 is located between two adjacent support legs 23 in the width direction of the vehicle 100.

This allows for the use of space between two support legs 23 for arrangement of the raised portion 51, thereby helping increase utilization of space inside the vehicle 100 for arranging the battery 10 and increasing capacity of the battery 10.

It can be understood that the seat body 21 includes a cushion 211, and the cushion 211 is made of a material such as sponge that can undergo elastic deformation to improve the passenger's ride comfort.

It can be understood that it is necessary to constrain the shape of the cushion 211 in order to support structure of the seat body 21.

In some embodiments where the cushion 211 is provided, the raised portion 51 is embedded in the cushion 211 to support the seat body 21 along the height direction of the vehicle 100.

That is, the raised portion 51 forms at least part of the structure that supports the cushion 211. This helps simplify structure of the seat 20, maximize utilization of space inside the seat 20, and reduce production costs.

It can be understood that the seat body 21 includes a frame 212, and the frame 212 is inserted into the cushion 211 and fits the cushion 211 so as to constrain the shape of the cushion 211.

In some embodiments, with reference to FIGS. 3 and 8, the frame 212 is connected to the raised portion 51 to form a force transmission path of the cushion 211, the frame 212, and the raised portion 51, thereby transferring the weight of the passenger to the support plate 50.

The relative structural relationship between the support plate 50 and the battery 10 is not limited. The embodiments of the present disclosure provide the following two implementations of the battery 10 and the support plate 50.

### Implementation 1

With reference to FIGS. 7 to 12, and 36 to 39, the accommodating box 11 has one side open to form a first opening 11c, the support plate 50 covers the first opening 11c to enclose an accommodating cavity 11a, and the battery assembly 12 is disposed in the accommodating cavity 11a.

That is, before the battery 10 is installed in the vehicle 100, one side of the battery assembly 12 in the battery 10 facing the first opening 11c is directly exposed to the outside; when the battery 10 is installed in the vehicle 100, the battery assembly 12 is spaced apart from the interior space 100a only by the support plate 50.

This helps simplify structure of the vehicle 100 to make arrangement of the support plate 50 and the battery 10 more compact, and helps increase capacity of the battery 10 in response to a fixed volume of the space inside the vehicle 100. Moreover, this allows for direct maintenance of the battery assembly 12 through the first opening 11c after the battery 10 is detached from the vehicle 100.

It can be understood that the support plate 50 completely covers the first opening 11c.

It can be understood that when the battery 10 is installed in vehicle 100, the convenience in maintenance of the battery 10 needs to be considered.

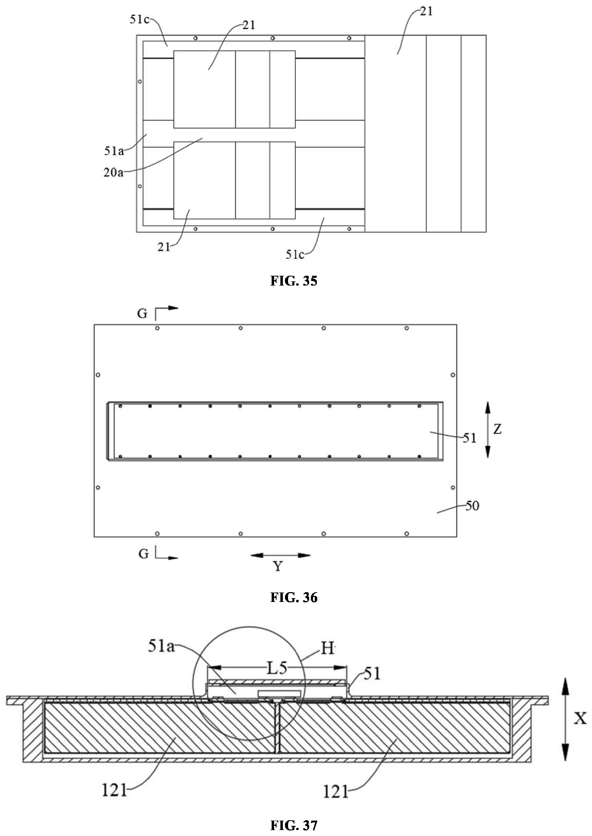

In some embodiments, with reference to FIGS. 37 to 39, the raised portion 51 includes a raised body 511 and a first cap 512, the raised body 511 is provided with a first through hole 511a that is in communication with the accommodating space 51a, and the first cap 512 is detachably connected to the raised body 511 to cover the first through hole 511a.

In this way, the part of the battery assembly 12 in the accommodating space 51a can be maintained in the interior space 100a through the first opening 11c and the first through hole by detaching the first cap 512 when inspection and maintenance of the battery 10 are required, and there is no need to detach the battery 10, which helps increase working space for maintenance personnel and improves the convenience of maintenance operations.

There may be one or more first through holes 511a, which is not limited in the specific number.

It can be understood that it is necessary to reduce the probability of foreign objects entering the accommodating cavity 11a through a seam between the first cap 512 and the raised body 511 to affect the operation of the battery assembly 12.

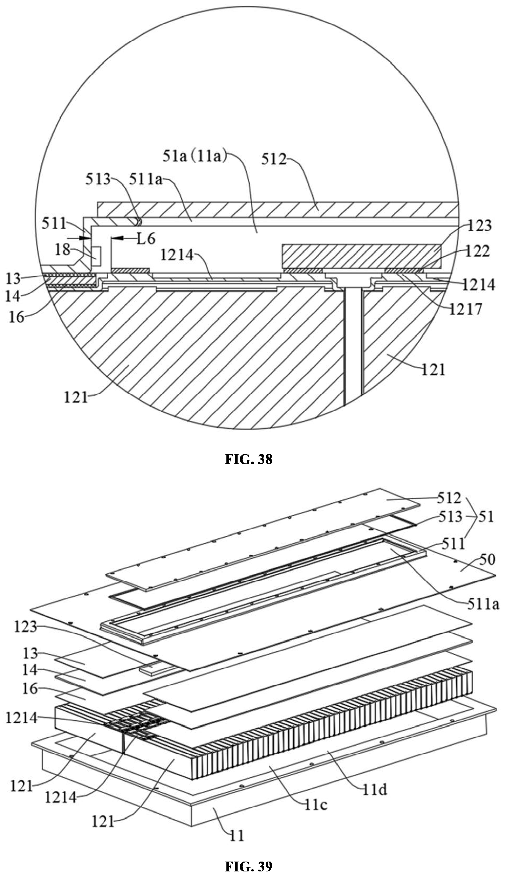

In some embodiments, with reference to FIGS. 38 and 39, the raised portion 51 further includes a first sealing member 513, the first sealing member 513 is disposed around the periphery of the first through hole 511a, and the first sealing member 513 is sandwiched between the raised body 511 and the first cap 512 to seal between the raised body 511 and the first cap 512.

The first seal 513 may undergo elastic deformation. When the first sealing member 513 is sandwiched between the raised body 511 and the first cap 512, the first sealing member 513 deforms elastically. In this way, the seam space of the contact area between the raised body 511 and the first sealing member 513 as well as between the first cap 512 and the first sealing member 513 is reduced, thereby reducing the probability of external foreign objects entering the accommodating cavity 11a to affect operation of the battery 10, prolonging service life of the battery 10, and facilitating safety in use of the battery 10.

The material of the third sealing member 513 may include, but is not limited to, silicone, industrial rubber, etc.

The specific method for achieving a detachable connection between the first cap and the raised body 511 is not limited.

In some embodiments, the first cap 512 is mounted onto the raised body 511 by threaded fasteners.

The threaded fasteners are fasteners such as screws, bolts, and studs that achieve threaded connections.

Thus, the use of the threaded fasteners facilitates disassembly while enhancing the connection strength between the first cap 512 and the raised body 511.

It can be understood that one of the raised body 511 and the first cap 512 is provided with a through hole and the other one is provided with a threaded hole, and the threaded fastener penetrates the through hole to be in threaded connection with thread in the threaded hole.

In some embodiments, the first cap 512 is slidably snap-fitted to the raised body 511.

That is, one of the first cap 512 and the raised body 511 is provided with a slide slot, and a portion of the other one can be embedded in the slide slot, so that the two can slide relative to each other.

The sliding manner allows the first cap 512 to open or close the first through hole 511a more quickly, thereby improving the convenience in maintenance.

In some embodiments, the first cap 512 is hinged to the raised body 511.

That is, the first cap 512 can pivot relative to the raised body 511 by means of hinge, so that the first cap 512 opens or closes the first through hole 511a.

The pivoting manner allows the first cap 512 to open or close the first through hole 511a more quickly, thereby improving the convenience in maintenance.

In some embodiments, with reference to FIG. 39, the battery 10 includes a temperature control assembly 14, and the temperature control assembly 14 is sandwiched between the support plate 50 and the battery assembly 12.

The temperature control assembly 14 has a flow channel and a temperature control medium inside. The temperature control medium can flow in the flow channel to transfer heat from one part of the temperature control assembly 14 to another part thereof, thereby achieving the purpose of adjusting the temperature of an object in contact with the temperature control assembly 14.

In this way, the temperature control assembly 14 absorbs heat generated during operation of the battery assembly 12 to reduce working temperature of the battery assembly 12, thereby improving safety in use of the battery 10. Moreover, this also reduce heat transferred from the battery assembly 12 to the support plate 50 and irradiated into the interior space 100a, makes better use of the advantage of large area of the support plate 50, expands the contact area between the temperature control assembly 14 and the battery assembly 12, and improves the temperature control effect.

It should be noted that the specific structure and heat exchange principle of the temperature control assembly 14 have already been applied in the related art, which will not be repeated here.

It can be understood that the position of the temperature control assembly 14 relative to the battery assembly 12 needs to be fixed to ensure the temperature control effect of the temperature control assembly 14.

In some embodiments, with reference to FIGS. 38 and 39, the battery 10 includes a first adhesive layer 13, and the first adhesive layer 13 is adhered between the support plate 50 and an outer surface of the temperature control assembly 14.

In this way, the relative position between the temperature assembly 14 and the support plate 50 is fixed, reducing the probability of friction damage caused by relative movement between the two.

In some embodiments, with reference to FIGS. 38 and 39, the battery 10 includes a third adhesive layer 16, and the third adhesive layer 16 is adhered between the temperature control assembly 14 and an outer surface of the battery assembly 12.

In this way, the relative position between the temperature assembly 14 and the battery assembly 12 is fixed, reducing the probability of friction damage caused by relative movement between the two.

In an embodiment where the protrusion 1214 is provided and at least part of the protrusion 1214 is located in the accommodating space 51a, with reference to FIG. 12, the protrusion 1214 has a height not exceeding 77% of the height of the raised portion 51. That is, H4/H2 ≤ 77%.

On one hand, this enables the spacing between the protrusion 1214 and the accommodating space 51a in the height direction of the battery 10 to lower the probability of damage caused by direct contact between the two, and facilitates arrangement of other components of the battery assembly 12 into the accommodating space 51a. On the other hand, this allows the raised portion 51 of an appropriate thickness to protect the protrusion 1214 better.

In some embodiments, with reference to FIG. 12, the height of the protrusion 1214 accounts for 21% to 53% of the height of the raised portion 51.

In this way, the size of the accommodating space 51a can meet requirements for arranging other components of the battery assembly 12, and the raised portion 51 has enough strength to protect the protrusion 1214.

In some embodiments where the terminal posts 1213 are provided, with reference to FIG.12, the terminal posts 1213 of at least two battery cells 121 are located in the same accommodating space 51a.

This facilitates electrical connection of the terminal posts 1213 of different battery cells 121 within a single accommodating space 51a, making structure of the battery 10 more compact.

In some embodiments, with reference to FIGS. 38 and 40, the vehicle 100 further includes second insulating members 18, and the second insulating members 18 are disposed on an inner wall of the accommodating space 51a.

In this way, by utilizing the insulating properties of the second insulating members 18, the risk of contact between the battery assembly 12 and the inner wall of the accommodating space 51a can be reduced, thereby lowering the risk of charge transfer between the battery assembly 12 and the support plate 50, and lowering the risk of short circuits and other problems during use of the battery 10.

The material of the second sealing members 18 may include, but is not limited to, rubber, etc.

In some embodiments, with reference to FIGS. 38 and 40, the battery assembly 12 includes battery cells 121, the battery cells 121 include terminal posts 1213, and the second insulating members 18 are disposed opposite the terminal posts 1213, respectively.

This reduces the probability of contact between the terminal posts 1213 and the support plate 50 due to relative movement between the battery assembly 12 and the support plate 50, thereby lowering the risk of short circuits of the battery cells 121 caused by the contact between the terminal posts 1213 and the support plate 50.

The second insulating members 18 are positioned opposite to the terminal posts 1213, meaning that no other components of the vehicle 100 are provided between the second insulating members 18 and the terminal posts 1213.

In some embodiments, with reference to FIG. 38, the battery assembly 12 further includes a busbar 122, at least part of the busbar 122 is located in the accommodating space 51a, a distance between the inner wall of the accommodating space 51a and the busbar 122 in a first direction is not less than 1% of the dimension of the accommodating space 51a in the first direction, where the first direction is perpendicular to the raising direction of the raised portion 51.

This helps reduce the probability of the busbar 122 coming into contact with the inner wall of the accommodating space 51a, and reduces the probability of short circuits due to the busbar 122 coming into contact with the support plate 50.

The first direction may be any direction perpendicular to the raising portion of the raised body 51, such as the length direction of the battery 10, and the width direction of the battery 10.

In some embodiments, the distance between the inner wall of the accommodating space 51a and the busbar 122 in the first direction accounts for 2% to 10% of the dimension of the accommodating space in the first direction.

This further helps reduce the probability of the busbar 122 coming into contact with the inner wall of the accommodating space 51a.

### Implementation 2

With reference to FIGS. 2 to 6, 13 to 16, and 41 to 44, the accommodating box 11 includes a first box wall 111, the first box wall 111 is located on a side of the accommodating box 11 facing the support plate 50, and a portion of the first box wall 111 extends into the accommodating space 51a.

That is, the interior space 100a and the battery assembly 12 are separated by the first box wall 111 and the support plate 50. The first box wall 111 itself is a component of the battery 10. Even when the battery 10 is detached from the vehicle 100, the first box wall 111 is still located on the battery 10.

Therefore, on one hand, during separate transport of the battery 10, the first box wall 111 provides protection for the battery assembly 12. On the other hand, the probability of contact between the battery assembly 12 and the support plate 50 is reduced, thereby lowering the risk of adverse effects on other components and people in the vehicle 100 caused by issues such as leakage of the battery 10.

In some embodiments, with reference to FIGS. 13 to 16, and 41 to 44, the accommodating box 11 includes a box body 112 and a box cover, the first box wall 111 forms the box cover, the box body 112 has one side open to form a second opening 112a, the box cover covers the second opening 112a to form an accommodating cavity 11a with the box body 112, and the battery assembly 12 is disposed in the accommodating cavity 11a.

In this way, the accommodating box 11 is formed by assembling the accommodating box 112 and the box cover, which facilitates disassembly of the accommodating box 11 according to actual needs for inspection and maintenance of the battery assembly 12.

It can be understood that the box body 112 and the box cover are detachably connected such that they can be selectively connected or separated.

In some embodiments, with reference to FIGS. 42 to 44, the first box wall 111 includes a box wall body 1112 and a second cap 1113, the box wall body 1112 is provided with a second through hole 1112a that is in communication with the accommodating cavity 11a, and the second cap 1113 is detachably connected to the box wall body 1112 to cover the second through hole 1112a.

In this way, when the battery 10 is separated from the vehicle 100, the battery assembly 12 in the accommodating cavity 11a can be maintained through the second through hole 1112a by detaching the second cap 1113 only, thereby improving the convenience and efficiency of maintenance.

There may be one or more second through holes 1112a, which is not limited in the specific number.

It can be understood that it is necessary to reduce the probability of foreign objects entering the accommodating cavity 11a through a seam between the second cap 1113 and the box wall body 1112 to affect the operation of the battery assembly 12.

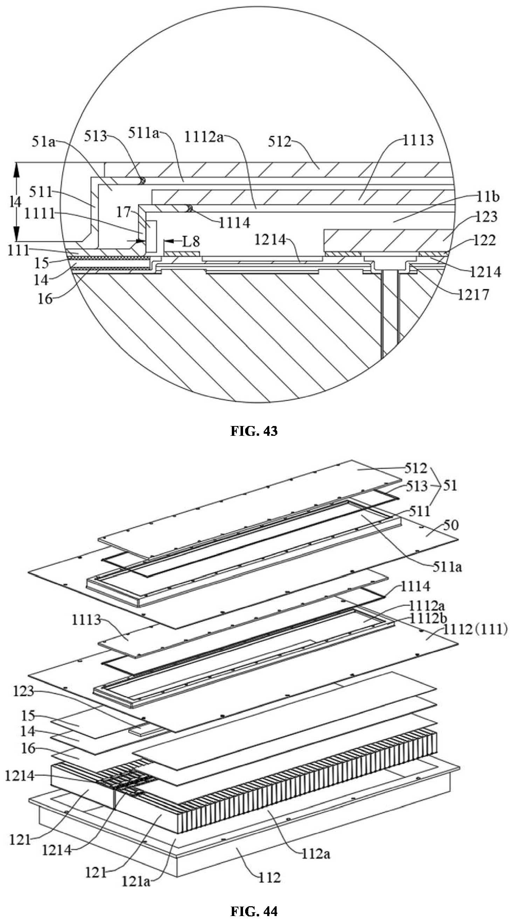

In some embodiments, with reference to FIGS. 42 and 44, the box cover further includes a second sealing member 1114, the second sealing member 1114 is disposed around the periphery of the second through hole 1112a, and the second sealing member 1114 is sandwiched between the box wall body 1112 and the second cap 1113 to seal between the box wall body 1112 and the second cap 1113.

The second seal 1114 may undergo elastic deformation. When the second sealing member 1114 is sandwiched between the box wall body 1112 and the second cap 1113, the second sealing member 1114 deforms elastically. In this way, the seam space of the contact area between the box wall body 1112 and the second sealing member 1114 as well as between the second cap 1113 and the second sealing member 1114 is reduced, thereby reducing the probability of external foreign objects entering the accommodating cavity 11a to affect operation of the battery assembly 12, prolonging service life of the battery 10, and facilitating safety in use of the battery 10.

The material of the second sealing member 1114 may include, but is not limited to, silicone, industrial rubber, etc.

The specific method for achieving a detachable connection between the second cap and the box wall body 1112 is not limited.

In some embodiments, the second cap 1113 is mounted onto the box wall body 1112 by threaded fasteners.

Thus, the use of the threaded fasteners facilitates disassembly while enhancing the connection strength between the second cap 1113 and the box wall body 1112.

It can be understood that one of the box wall body 1112 and the second cap 1113 is provided with a through hole and the other one is provided with a threaded hole, and the threaded fastener penetrates the through hole to be in threaded connection with thread in the threaded hole.

In some embodiments, the second cap 1113 is slidably snap-fitted with the box wall body 1112.

That is, one of the second cap 1113 and the box wall body 1112 is provided with a slide slot, and a portion of the other one can be embedded in the slide slot, so that the two can slide relative to each other.

The sliding manner allows the second cap 1113 to open or close the second through hole 1112a more quickly, thereby improving the convenience in maintenance.

In some embodiments, the second cap 1113 is hinged to the box wall body 1112.

That is, the second cap 1113 can pivot relative to the box wall body 1112 by means of hinge, so that the second cap 1113 opens or closes the first through hole 511a.

The pivoting manner allows the second cap 1113 to open or close the second through hole 1112a more quickly, thereby improving the convenience in maintenance.

It can be understood that when battery 10 is installed in vehicle 100, it is necessary to facilitate inspection and maintenance of the battery 10.

In some embodiments, with reference to FIGS. 42 to 43, the raised portion 51 includes a raised body 511 and a first cap 512, the raised body 511 is provided with a first through hole 511a that is in communication with the accommodating space 51a, and the first cap 512 is detachably connected to the raised body 511 to cover the first through hole 511a. The second through hole 1112a is disposed opposite the first through hole 511a.

In this way, in the state where the first cap 512 and the second cap 1113 are detached, the interior space 100a, the accommodating space 51a and the accommodating cavity 11a are in communication with one another, and the accommodating space 51a is disposed opposite the accommodating cavity 11a, so that maintenance personnel can maintain the battery assembly 12 directly in the interior space 100a and do not need to detach the battery 10 from the vehicle 100, thus improving convenience of maintenance operations and improving working efficiency. In some embodiments, in a projection plane perpendicular to a direction in which the second through hole 1112a is opposite the first through hole 511a, a projection of the second through hole 1112a is located in the projection range of the first through hole 511a. This facilitates the assembly and disassembly of the second cap 1113 and the box wall body 1112 through the first through hole 511a.

In some embodiments, with reference to FIGS. 43 and 44, the battery 10 includes a temperature control assembly 14, and the temperature control assembly 14 is sandwiched between the first box wall 111 and the battery assembly 12.

In this way, the temperature control assembly 14 absorbs heat generated during operation of the battery assembly 12 to reduce working temperature of the battery assembly 12, thereby improving safety in use of the battery 10. Moreover, the temperature control assembly 14 can radiates part of the heat directly through the box wall of the accommodating box 11 to the external environment, increasing the heat dissipation area and improving temperature control effect.

In some embodiments, with reference to FIGS. 43 and 44, the battery 10 includes a second adhesive layer 15, and the second adhesive layer 15 is adhered between the first box wall 111 and the outer surface of the temperature control assembly 14.

In this way, the relative position between the temperature assembly 14 and the first box wall 111 is fixed, reducing the probability of friction damage caused by relative movement between the two.

In some embodiments, with reference to FIGS. 43 and 44, the battery 10 includes a third adhesive layer 16, and the third adhesive layer 16 is adhered between the temperature control assembly 14 and an outer surface of the battery assembly 12.

In this way, the relative position between the temperature assembly 14 and the battery assembly 12 is fixed, reducing the probability of friction damage caused by relative movement between the two.

In some embodiments, with reference to FIGS. 13 to 16, and 41 to 44, a portion of the first box wall 111 protrudes to form a boss 1111, at least part of the boss 1111 extends into the accommodating space 51a, an accommodating portion 11b is formed on a side of the boss 1111 facing away from the accommodating space 51a, and a portion of the battery assembly 12 is located in the accommodating portion 11b.

In this way, with the accommodating portion 11b, a portion of the battery assembly 12 is located in the accommodating space 51a, the part of the battery assembly 12 in the accommodating space 51a is protected by the boss 1111, so that the probability of direct contact between the battery assembly 12 and the support plate 50 is reduced. Moreover, this allows the region of the first box wall 111 where the protrusion 1214 is provided to have the same thickness as the other regions, thereby helping reduce the total size of the first box wall 111 so as to reduce dimensions of the accommodating box 11, reduce the total volume of the battery 10, and increase the energy density and space utilization of the battery 10.

In some embodiments, with reference to FIG. 6, the boss 1111 has a height not exceeding 98.5% of the height of the raised portion 51. That is, H3/H2 ≤ 98.5%.

This reduces the probability of the boss 1111 abutting against the inner wall of the accommodating space 51a in the height direction to affect arrangement of the battery 10 and the support plate 50.

In some embodiments, with reference to FIG. 6, the height of the boss 1111 accounts for 21% to 53% of the height of the raised portion 51. That is, 33% ≤ H3/H2 ≤ 95.2%.

This further reduces the probability of the boss 1111 abutting against the inner wall of the accommodating space 51a in the height direction and makes the space in the accommodating portion 11b larger for accommodating the battery assembly 12.

In some embodiments, with reference to FIG. 12, the battery assembly 12 further includes battery cells 121, each of the battery cells 121 includes a housing 1211, the housing 1211 has a first housing wall 1212, the first housing wall 1212 includes a protrusion 1214, at least part of the protrusion 1214 is located in the accommodating portion 11b, and the protrusion 1214 has a height not exceeding 77% of the height of the boss 1111. That is, H4/H3 ≤ 77%.

On one hand, this enables the spacing between the protrusion 1214 and the accommodating portion 11b in the height direction of the battery 10 to lower the probability of damage caused by direct contact between the two, and facilitates arrangement of other components of the battery assembly 12 into the accommodating portion 11b. On the other hand, this allows the first box wall 111 of an appropriate thickness to protect the protrusion 1214 better.

In some embodiments, the height of the boss 1214 accounts for 36% to 53% of the height of the boss 1111. That is, 36% ≤ H4/H3 ≤ 53%.

This further reduces the probability of damage caused by direct contact between the two, which is more conducive to arranging other components of the battery assembly 12 within the accommodating portion 11b.

In some embodiments, with reference to FIG. 6, the battery assembly 12 includes a protruding portion 12a, at least part of the protruding portion 12a is located in the accommodating portion 11b, and the protruding portion 12a has a height not exceeding 94% of the height of the boss 1111. That is, H1/H3 ≤ 94%.

This helps reduce the probability of the protruding portion 12a abutting against the boss 1111 in the vertical direction, thus reducing the probability of damage caused by the abutting between the two.

In some embodiments, with reference to FIG. 6, the height of the protruding portion 12a accounts for 74% to 86% of the height of the boss 1111. That is, 74% ≤ H1/H3 ≤ 86%.

This further reduces the probability of the protruding portion 12a abutting against the boss 1111 in the vertical direction and helps increase space utilization of the protruding portion 12a to the accommodating portion 11b.

In some embodiments, with reference to FIGS. 42 and 43, the battery assembly 12 further includes a busbar 122, at least part of the busbar 122 is located in the accommodating portion 11b, a distance between an inner wall of the accommodating portion 11b and the busbar 122 in a first direction is not less than 1% of the dimension of the accommodating portion 11b in the first direction, where the first direction is perpendicular to the thickness direction of the first box wall 111. That is, L8/L7 ≥ 1%.

This helps reduce the probability of the busbar 122 coming into contact with the inner wall of the accommodating portion 11b to result in short circuits, enabling the battery assembly 12 to function properly.

In some embodiments, the distance between the inner wall of the accommodating portion 11b and the busbar 122 in the first direction accounts for 2% to 10% of the dimension of the accommodating portion in the first direction. That is, 2% ≤ L8/L7 ≤ 10%.

This further helps reduce the probability of the busbar 122 coming into contact with the inner wall of the accommodating portion 11b to result in short circuits.

In some embodiments, with reference to FIGS. 5 and 6, the battery assembly 12 includes battery cells 121, the battery cells 121 include terminal posts 1213, and the terminal posts 1213 of at least two of the battery cells 121 are located in the same accommodating portion 11b.

This facilitates electrical connection of the terminal posts 1213 of different battery cells 121 within a single accommodating portion 11b, making structure of the battery 10 more compact.

In some embodiments, with reference to FIGS. 43 and 45, the battery 10 includes first insulating members 17, and the first insulating members 17 are disposed on the inner wall of the accommodating portion 11b.

In this way, by utilizing the insulating properties of the first insulating members 17, the risk of contact between the battery assembly 12 and the inner wall of the accommodating portion 11b can be reduced, thereby lowering the risk of charge transfer between the battery assembly 12 and the first box wall 111, and lowering the risk of short circuits and other problems during use of the battery 10.

In some embodiments, with reference to FIGS. 43 and 45, the battery assembly 12 includes battery cells 121, the battery cells 121 include terminal posts 1213, and the first insulating members 17 are disposed opposite the terminal posts 1213, respectively.

The first insulating members 17 are disposed opposite the terminal posts 1213, meaning that no other components of the battery assembly 12 are provided between the first insulating members 17 and the terminal posts 1213.

This reduces the probability of contact between the terminal posts 1213 and the first box wall 111 due to relative movement between the battery assembly 12 and the first box wall 111, thereby lowering the risk of short circuits of the battery cells 121 caused by the contact between the terminal posts 1213 and the first box wall 111.

It can be understood that the first insulating members 17 and the terminal posts 1213 may be spaced apart or attached to each other.

In some embodiments where the box wall body 1112 and the second cap 1113 are provided, with reference to FIGS.14 to 16 and FIG. 43, part or all of the boss 1111 forms the second cap 1113.

This facilitates the assembly and disassembly of the boss 1111, thereby facilitating inspection and maintenance of the battery assembly 12.

It can be understood that one portion of the boss 1111 is formed by the second cap 1113, and the other portion of the boss is formed by the box wall body 1112.

In some embodiments, with reference to FIGS. 15, 16 and 44, a portion of the box wall body 1112 protrudes in a direction away from the accommodating cavity 11a to form a mounting step 1112b. The second through hole 1112a passes through the mounting step 1112b and the second through hole 1112a is in communication with the accommodating cavity 11a. The second cap 1113 detachably covers the mounting step 1112b to cover the second through hole 1112a. The mounting step 1112b and the second cap 1113 together form the boss 1111. In this way, the disassembly of the boss 1111 is realized, facilitating inspection and maintenance of the battery assembly 12.

In some embodiments, a length direction of the boss 1111 is the same as a length direction of the accommodating cavity 11a, and the boss and the accommodating cavity have the same dimension in the length direction.

The length direction of the accommodating cavity 11a is the same as the length direction of the battery 10.

This helps maximize the dimension of the accommodating portion 11b in the length direction of the battery 10, thereby making it easier for the size and volume of the accommodating portion 11b to adapt to battery assemblies 12 of various sizes and shapes.

In some embodiments, the length direction of the boss 1111 is the same as a width direction of the accommodating cavity 11a, and the boss 1111 has a length equal to the width of the first box wall 111.

The width direction of the accommodating cavity 11a is the same as the width direction of the battery 10.

This helps maximize the dimension of the accommodating portion 11b in the width direction of the battery 10, thereby making it easier for the size and volume of the accommodating portion 11b to adapt to battery assemblies 12 of various sizes and shapes.

In some embodiments, with reference to FIG. 13, the boss 1111 has a width not exceeding 500 mm, i.e., l1 ≤ 500 mm.

Thus, this allows the first box wall 111 to have a large flat region on its surface to fit with other components in the vehicle 100, thereby reducing the adverse impact of the boss 1111 on arrangement of other components in the vehicle 100. Moreover, this also reduce the adverse impact of reduced structural strength of the boss 1111 caused by its large width, and reduces the probability of damage to the components in the accommodating portion 11b caused by deformation of the boss 1111.

In some embodiments, with reference to FIG. 13, the boss 1111 has a width in the range of 50 mm to 300 mm, i.e., 50 mm ≤ l1 ≤ 300 mm.

In this way, the space in the accommodating portion 11b can meet arrangement requirements for the battery assembly 12.

The specific value of the width of the boss 1111 is not limited. For example, the width of the boss 1111 may be 50 mm, 100 mm, 200 mm, 300 mm, etc.

In some embodiments, with referent to FIG. 15, the boss 1111 has a height not exceeding 300mm, i.e., l2 ≤ 300 mm.

This facilitates compatibility with other components in the vehicle 100, minimizing the adverse impact of the boss 1111 on arrangement of other components in the vehicle 100. This also reduces the probability that the boss 1111 is deformed or bent due to shear stress perpendicular to the height direction to cause damage to the battery assembly 12 in the accommodating portion 11b.

In some embodiments, with reference to FIG. 15, the boss 1111 has a height in the range of 5 mm to 100 mm, i.e., 5 mm ≤ l2 ≤ 100 mm.

In this way, the space in the accommodating portion 11b can meet arrangement requirements for the protruding portion 12a.

The specific value of the height of the boss 1111 is not limited. For example, the width dimension of the boss 1111 may be 5 mm, 8 mm, 20 mm, 30 mm, 40 mm, 50 mm, 60 mm, 70 mm, 80 mm, 90 mm, 100 mm, etc. In some embodiments, with reference to FIG. 41, the raised portion 51 has a width not exceeding 500 mm, i.e., l3 ≤ 500 mm.

In this way, the space in the accommodating portion 11b can meet arrangement requirements for the battery assembly 12.

The specific value of the width of the raised portion 51 is not limited. For example, the width of the raised portion 51 may be 100 mm, 200 mm, 300 mm, 400 mm, 500 mm, etc.

In some embodiments, with reference to FIG. 43, the raised portion 51 has a height not exceeding 300 mm, i.e., 14 ≤ 300 mm.

This facilitates compatibility with other components in the vehicle 100, minimizing the adverse impact of the boss 1111 on arrangement of other components in the vehicle 100. This also reduces the probability that the raised portion 51 is deformed or bent due to shear stress perpendicular to the height direction to cause damage to the battery assembly 12 in the accommodating portion 11b.

The specific value of the height of the raised portion 51 is not limited. For example, the height of the raised portion 51 may be 50 mm, 100 mm, 150 mm, 200 mm, 250 mm, 300 mm, etc.

Embodiments of the present disclosure further provide a battery 10 for a vehicle 100. With reference to FIGS. 2 to 12, the vehicle 100 includes a support plate 50, the battery 10 is located on one side of the support plate 50, the support plate 50 has a raised portion 51 facing away from the battery 10, an accommodating space 51a is formed on a side of the raised portion 51 facing the battery 10, the battery 10 includes an accommodating box 11 and a battery assembly 12, the battery assembly 12 is accommodated in the accommodating box 11, the battery assembly 12 includes a protruding portion 12a configured to extend toward the support plate 50 to enter the accommodating space 51a, and in a projection plane perpendicular to a protruding direction of the protruding portion 12a, part of a projection of the battery assembly 12 is located outside a projection of the protruding portion 12a.

That is, a portion of the battery assembly 12 is located in the accommodating space 51a, while the other portion is located outside the accommodating space 51a.

This allows the battery 10 to make better use of the space created by the raised portion 51, making structure of the battery 10 more compact and increasing capacity of the battery 10 in the vehicle 100.

In some embodiments, with reference to FIG. 39, the accommodating box 11 has a holding space 11d, the battery assembly 12 is disposed in the holding space 11d, one side of the holding space 11d is open to form a first opening 11c, and the first opening 11c is covered with the support plate 50.

That is, before the battery 10 is installed in the vehicle 100, one side of the battery assembly 12 in the battery 10 facing the first opening 11c is directly exposed to the outside; when the battery 10 is installed in the vehicle 100, the battery assembly 12 is spaced apart from the interior space 100a only by the support plate 50.

This helps simplify the structure of the battery 10 and the vehicle 100 to make arrangement of the support plate 50 and the battery 10 more compact, and helps increase capacity of the battery 10 in response to a fixed volume of space inside the vehicle 100. Moreover, this allows for direct maintenance of the battery assembly 12 through the first opening 11c after the battery 10 is detached from the vehicle 100.

In some embodiments, with reference to FIGS. 38 and 39, the battery 10 includes a temperature control assembly 14, where the temperature control assembly 14 is disposed on a side of the battery assembly 12 facing the first opening 11c.

In this way, the temperature control assembly 14 absorbs heat generated during operation of the battery assembly 12 to reduce working temperature of the battery assembly 12, thereby improving safety in use of the battery 10, and also reducing heat transferred from the battery assembly 12 to the support plate 50 and irradiated into the interior space 100a.

In some embodiments, with reference to FIGS. 38 and 39, the battery 10 includes a first adhesive layer 13, and the first adhesive layer 13 is configured to adhere the support plate 50 to the outer surface of the temperature control assembly 14.

In this way, the relative position between the temperature assembly 14 and the support plate 50 is fixed by means of the first adhesive layer, reducing the probability of friction damage caused by relative movement between the two.

It can be understood that the first adhesive layer 13 is located on the side of the temperature control assembly 14 facing the first opening 11c.

In some embodiments, with reference to FIGS. 38 and 39, the battery 10 includes a third adhesive layer 16, and the third adhesive layer 16 is adhered between the temperature control assembly 14 and an outer surface of the battery assembly 12.

In this way, the relative position between the temperature assembly 14 and the battery assembly 12 is fixed, reducing the probability of friction damage caused by relative movement between the two.

In some embodiments, with reference to FIGS. 13 to 16 and FIGS. 41 to 44, the accommodating box 11 includes a first box wall 111, the first box wall 111 is located on one side of the accommodating box 11, and a portion of the first box wall 111 is configured to extend into the accommodating space 51a.

Therefore, during separate transport of the battery 10, the first box wall 111 provides protection for the battery assembly 12, thereby reducing the probability of damage to the battery assembly 12 caused by collisions.

In some embodiments, with reference to FIGS. 13 to 16, and 41 to 44, the accommodating box 11 includes a box body 112 and a box cover, the first box wall 111 forms the box cover, the box body 112 has one side open to form a second opening 112a, the box cover covers the second opening 112a to form an accommodating cavity 11a with the box body 112, and the battery 10 is disposed in the accommodating cavity 11a.

In this way, the accommodating box 11 is formed by assembling the accommodating box 112 and the box cover, which facilitates disassembly of the accommodating box 11 according to actual needs, thereby facilitating installation of the battery assembly 12 into the accommodating cavity and subsequent inspection and maintenance of the battery assembly 12.

In some embodiments, with reference to FIGS. 42 to 44, the first box wall 111 includes a box wall body 1112 and a second cap 1113, the box wall body 1112 is provided with a second through hole 1112a that is in communication with the accommodating cavity 11a, and the second cap 1113 is detachably connected to the box wall body 1112 to cover the second through hole 1112a.

In this way, the battery assembly 12 in the accommodating cavity 11a can be maintained through the second through hole 1112a by detaching the second cap 1113 only rather than disassembling the box body 112 and the box cover, thereby improving the convenience and efficiency of maintenance.

In some embodiments, with reference to FIGS. 42 and 44, the box cover further includes a second sealing member 1114, the second sealing member 1114 is disposed around the periphery of the second through hole 1112a, and the second sealing member 1114 is sandwiched between the raised portion 511 and the second cap 1113 to seal between the box wall body 1112 and the second cap 1113.

In this way, with the second sealing member 1114, the seam space of the contact area between the box wall body 1112 and the second sealing member 1114 as well as between the second cap 1113 and the second sealing member 1114 is reduced, thereby reducing the probability of external foreign objects entering the accommodating cavity 11a to affect operation of the battery assembly 12, prolonging service life of the battery 10, and facilitating safety in use of the battery 10.

The specific method for achieving a detachable connection between the second cap and the box wall body 1112 is not limited.

In some embodiments, the second cap 1113 is mounted onto the box wall body 1112 by threaded fasteners.

Thus, the use of the threaded fasteners facilitates disassembly while enhancing the connection strength between the second cap 1113 and the box wall body 1112.

It can be understood that one of the box wall body 1112 and the second cap 1113 is provided with a through hole and the other one is provided with a threaded hole, and the threaded fastener penetrates the through hole to be in threaded connection with thread in the threaded hole.

In some embodiments, the second cap 1113 is slidably snap-fitted with the box wall body 1112.

That is, one of the second cap 1113 and the box wall body 1112 is provided with a slide slot, and a portion of the other one can be embedded in the slide slot, so that the two can slide relative to each other.

The sliding manner allows the second cap 1113 to open or close the second through hole 1112a more quickly, thereby improving the convenience in maintenance.

In some embodiments, the second cap 1113 is hinged to the box wall body 1112.

That is, the second cap 1113 can pivot relative to the box wall body 1112 by means of hinge, so that the second cap 1113 opens or closes the first through hole 511a.

The pivoting manner allows the second cap 1113 to open or close the second through hole 1112a more quickly, thereby improving the convenience in maintenance.

In some embodiments, with reference to FIGS. 13 to 16, and 41 to 44, one of outer surfaces of two opposite sides of a portion of the first box wall 111 protrudes to form a boss 1111 while the other one forms an accommodating portion 11b, at least part of the boss 1111 is configured to extend into the accommodating space 51a, and a portion of the battery assembly 12 is located in the accommodating portion 11b.

In this way, with the accommodating portion 11b, a portion of the battery assembly 12 is located in the accommodating space 51a, the part of the battery assembly 12 in the accommodating space 51a is protected by the boss 1111, so that the probability of direct contact between the battery assembly 12 and the support plate 50 is reduced. Moreover, this allows the region of the first box wall 111 where the protrusion 1214 is provided to have the same thickness as the other regions, thereby helping reduce the total size of the first box wall 111 so as to reduce dimensions of the accommodating box 11, reduce the total volume of the battery 10, and increase the energy density and space utilization of the battery 10.

In some embodiments where the box wall body 1112 and the second cap 1113 are provided, with reference to FIGS. 14 to 16 and FIG. 43, part or all of the boss 1111 forms the second cap 1113.

This facilitates the assembly and disassembly of the boss 1111, thereby facilitating inspection and maintenance of the battery assembly 12.

The embodiments/implementations provided in the present disclosure may be combined with each other without contradiction.

The above descriptions are merely preferred embodiments of the present disclosure, but are not intended to limit the present disclosure. It will be apparent to those skilled in the art that various modifications and changes may be made in the present disclosure. Any modifications, equivalent replacements and improvements made within the spirit and principle of the present disclosure shall be included within the scope of protection of the present disclosure.

### Industrial Applicability

Embodiments of the present disclosure provide a vehicle and a battery capable of increasing utilization of space inside the vehicle.

## Claims

1. A vehicle, comprising:
a support plate having a raised portion, the raised portion forming an accommodating space; and
a battery disposed on a side of the support plate where the accommodating space is provided, the battery comprising an accommodating box and a battery assembly, the battery assembly being accommodated in the accommodating box, and a portion of the battery assembly extending into the accommodating space.

2. The vehicle according to claim 1, wherein the battery assembly comprises a protruding portion, at least part of the protruding portion being accommodated in the accommodating space.

3. The vehicle according to claim 2, wherein in a projection plane perpendicular to a raising direction of the raised portion, part of a projection of the battery assembly is located outside a projection of the accommodating space.

4. The vehicle according to claim 2, wherein the battery assembly further comprises a plurality of battery cells, each of the battery cells comprises a housing, the housing has a first housing wall, and the protruding portion is disposed on the first housing wall.

5. The vehicle according to claim 4, wherein the battery assembly further comprises a busbar, the battery cell further comprises terminal posts, the terminal posts are disposed on the first housing wall, the terminal posts of two of the battery cells are electrically connected by the busbar, the protruding portion comprises the busbar, and at least part of the busbar is located in the accommodating space.

6. The vehicle according to claim 5, wherein at least part of each terminal post is accommodated in the accommodating space.

7. The vehicle according to any one of claims 4 to 6, wherein the first housing wall comprises a protrusion, the protruding portion comprises the protrusion, and at least part of the protrusion is located in the accommodating space.

8. The vehicle according to claim 7, wherein the protrusion is provided with the terminal posts.

9. The vehicle according to claim 8, wherein two terminal posts are provided and have opposite polarities, and the two terminal posts are disposed on the same protrusion.

10. The vehicle according to claim 9, wherein the protrusion is located at one end of the first housing wall in its length direction.

11. The vehicle according to claim 8, wherein two terminal posts are provided and have opposite polarities, and the two terminal posts are disposed on two protrusions respectively.

12. The vehicle according to claim 11, wherein the two protrusions are located at either end of the first housing wall in its length direction.

13. The vehicle according to any one of claims 7 to 12, wherein the protrusion is located at the center of the first housing wall in its length direction;
and/or the center of the first housing wall in its width direction coincides with the center of the protrusion in the width direction of the first housing wall.

14. The vehicle according to any one of claims 5 to 13, wherein the two terminal posts are spaced apart in the length direction of the first housing wall;
and/or the two terminal posts are spaced apart in the width direction of the first housing wall.

15. The vehicle according to any one of claims 4 to 14, wherein the battery cell further comprises an electrode assembly, the electrode assembly is accommodated in the housing, a portion of the first housing wall is recessed to form an avoidance recess, the avoidance recess is located on a side of the protrusion close to the electrode assembly, and a portion of the electrode assembly is located in the avoidance recess.

16. The vehicle according to claim 15, wherein the electrode assembly comprises a main body and tabs, the tabs being disposed at a side edge of the main body and electrically connected to the main body, and at least part of each tab being located in the avoidance recess.

17. The vehicle according to claim 16, wherein at least part of each tab is located in the accommodating space.

18. The vehicle according to claim 16, wherein the battery cell further comprises terminal posts disposed on the first housing wall, the electrode assembly further comprises adapters, the tabs are electrically connected to the terminal posts via the adapters respectively, and at least part of each tab is located in the accommodating space;
and/or at least part of each adapter is located in the accommodating space.

19. The vehicle according to any one of claims 1 to 18, wherein the battery assembly further comprises a sampling member, at least part of which is accommodated in the accommodating space;
and/or the battery assembly further comprises a battery management system, at least part of which is accommodated in the accommodating space;
and/or the battery assembly further comprises a relay, at least part of which is accommodated in the accommodating space;
and/or the battery assembly further comprises a high-voltage distribution unit, at least part of which is accommodated in the accommodating space;
and/or the battery assembly further comprises a high-voltage/low-voltage wiring harness, at least part of which is accommodated in the accommodating space.

20. The vehicle according to any one of claims 4 to 19, wherein the battery cell has a length not less than 350 mm;
and/or the battery cell has a width in the range of 5 mm to 50 mm;
and/or the battery cell has a height in the range of 80 mm to 200 mm.

21. The vehicle according to any one of claims 2 to 20, wherein the protruding portion in the accommodating space has a height in the range of 2 mm to 10 mm.

22. The vehicle according to any one of claims 1 to 21, wherein the vehicle further comprises seats disposed on a side of the support plate where the raised portion is formed.

23. The vehicle according to any one of claim 22, wherein in a projection perpendicular to a height direction of the vehicle, part or all of a projection of the raised portion is located within the projection range of the seats.

24. The vehicle according to claim 22 or 23, wherein at least two seats are provided, a first gap is formed between the two adjacent seats in a width direction of the vehicle, the raised portion comprises a first raised portion, and part or all of the first raised portion is located in the first gap.

25. The vehicle according to claim 24, wherein a plurality of seats are provided, the plurality of seats are divided into at least two rows spaced apart in a length direction of the vehicle, and the first raised portion extends along the length direction of the vehicle to the underside of the adjacent row of seats.

26. The vehicle according to any one of claims 22 to 25, wherein the raised portion comprises a second raised portion extending along the length direction of the vehicle and located on a side of the seat on the support plate in the width direction of the vehicle.

27. The vehicle according to claim 26, wherein two second raised portions are provided, the two second raised portions are located at either end of the support plate in the width direction of the vehicle, and the seats are located between the two second raised portions.

28. The vehicle according to claim 26, wherein the second raised portions are spaced apart from the seats in the width direction of the vehicle;
and/or part of each second raised portion is located beneath the seat.

29. The vehicle according to any one of claims 22 to 28, wherein the raised portion comprises a third raised portion extending along the width direction of the vehicle, a plurality of seats are provided, the plurality of seats are divided into at least two rows spaced apart in the length direction of the vehicle, and at least part of the third raised portion is located beneath the same row of seats.

30. The vehicle according to any one of claims 22 to 29, wherein each seat comprises a seat body, at least part of the seat body is spaced apart from the support plate in the height direction of the vehicle to form a second gap, and at least part of the raised portion is located in the second gap and spaced apart from the seat body in the height direction of the vehicle.

31. The vehicle according to claim 30, wherein the seat comprises support legs, the seat body and the support plate are spaced apart in a vertical direction to form the second gap, and the support legs are connected between the seat body and the support plate.

32. The vehicle according to claim 31, wherein a plurality of support legs are provided, the plurality of support legs are spaced apart in the width direction of the vehicle, and part or all of the raised portion is located between two adjacent support legs in the width direction of the vehicle.

33. The vehicle according to any one of claims 30 to 32, wherein the seat body comprises a cushion, and the raised portion is embedded in the cushion to support the seat body in the height direction of the vehicle.

34. The vehicle according to any one of claims 1 to 33, wherein the accommodating box has one side open to form a first opening, the support plate covers the first opening to enclose an accommodating cavity, and the battery assembly is disposed in the accommodating cavity.

35. The vehicle according to claim 34, wherein the raised portion comprises a raised body and a first cap, the raised body is provided with a first through hole that is in communication with the accommodating space, and the first cap is detachably connected to the raised body to cover the first through hole.

36. The vehicle according to claim 35, wherein the raised portion further comprises a first sealing member, the first sealing member being disposed around the periphery of the first through hole, the first sealing member being sandwiched between the raised body and the first cap to seal between the raised body and the first cap.

37. The vehicle according to claim 35 or 36, wherein the first cap is mounted onto the raised body by threaded fasteners; or,
the first cap is slidably snap-fitted to the raised body; or,
the first cap is hinged to the raised body.

38. The vehicle according to claim 36, wherein the battery comprises a temperature control assembly sandwiched between the support plate and the battery assembly.

39. The vehicle according to claim 38, wherein the battery comprises a first adhesive layer adhered between the support plate and an outer surface of the temperature control assembly;
and/or the battery comprises a third adhesive layer adhered between the temperature control assembly and an outer surface of the battery assembly.

40. The vehicle according to any one of claims 34 to 39, wherein the battery assembly further comprises battery cells, each of the battery cells comprises a housing, the housing has a first housing wall, the first housing wall comprises a protrusion, at least part of the protrusion is located in the accommodating space, and the protrusion has a height not exceeding 77% of the height of the raised portion.

41. The vehicle according to claim 40, wherein the height of the protrusion accounts for 21% to 53% of the height of the raised portion.

42. The vehicle according to any one of claims 34 to 41, wherein the battery assembly comprises battery cells, the battery cells comprise terminal posts, and the terminal posts of at least two of the battery cells are located in the same accommodating space.

43. The vehicle according to any one of claims 34 to 42, wherein the vehicle comprises second insulating members disposed on an inner wall of the accommodating space.

44. The vehicle according to claim 43, wherein the battery assembly comprises battery cells, the battery cells comprise terminal posts, and the second insulating members are disposed opposite the terminal posts, respectively.

45. The vehicle according to any one of claims 34 to 44, wherein the battery assembly further comprises a busbar, at least part of the busbar is located in the accommodating space, a distance between the inner wall of the accommodating space and the busbar in a first direction is not less than 1% of the dimension of the accommodating space in the first direction, where the first direction is perpendicular to the raising direction of the raised portion.

46. The vehicle according to claim 45, wherein the distance between the inner wall of the accommodating space and the busbar in the first direction accounts for 2% to 10% of the dimension of the accommodating space in the first direction.

47. The vehicle according to any one of claims 1 to 46, wherein the accommodating box comprises a first box wall, the first box wall being located on a side of the accommodating box facing the support plate, and a portion of the first box wall extending into the accommodating space.

48. The vehicle according to any one of claim 47, wherein the accommodating box comprises a box body and a box cover, the first box wall forms the box cover, the box body has one side open to form a second opening, the box cover covers the second opening to form an accommodating cavity with the box body, and the battery assembly is disposed in the accommodating cavity.

49. The vehicle according to claim 48, wherein the first box wall comprises a box wall body and a second cap, the box wall body is provided with a second through hole that is in communication with the accommodating cavity, and the second cap is detachably connected to the box wall body to cover the second through hole.

50. The vehicle according to claim 49, wherein the box cover further comprises a second sealing member disposed around the periphery of the second through hole, the second sealing member being sandwiched between the box wall body and the second cap to seal between the box wall body and the second cap.

51. The vehicle according to claim 49 or 50, wherein the second cap is mounted onto the box wall body by threaded fasteners; or,
the second cap is slidably snap-fitted with the box wall body; or,
the second cap is hinged to the box wall body.

52. The vehicle according to any one of claims 49 to 51, wherein the raised portion comprises a raised body and a first cap, the raised body is provided with a first through hole that is in communication with the accommodating space, and the first cap is detachably connected to the raised body to cover the first through hole; and
the second through hole is disposed opposite the first through hole.

53. The vehicle according to any one of claims 47 to 52, wherein the battery comprises a temperature control assembly sandwiched between the first box wall and the battery assembly.

54. The vehicle according to claim 53, wherein the battery comprises a second adhesive layer adhered between the first box wall and the outer surface of the temperature control assembly;
and/or the battery comprises a third adhesive layer adhered between the temperature control assembly and an outer surface of the battery assembly.

55. The vehicle according to any one of claims 47 to 54, wherein a portion of the first box wall protrudes to form a boss, at least part of the boss extends into the accommodating space, an accommodating portion is formed on a side of the boss facing away from the accommodating space, and a portion of the battery assembly is located in the accommodating portion.

56. The vehicle according to claim 55, wherein the boss has a height not exceeding 98.5% of the height of the raised portion.

57. The vehicle according to claim 55, wherein the boss has a height accounting for 33.3% to 53% of the height of the raised portion.

58. The vehicle according to any one of claims 55 to 57, wherein the battery assembly further comprises battery cells, each of the battery cells comprises a housing, the housing has a first housing wall, the first housing wall comprises a protrusion, at least part of the protrusion is located in the accommodating portion, and the protrusion has a height not exceeding 77% of the height of the boss.

59. The vehicle according to claim 58, wherein the height of the protrusion accounts for 36% to 53% of the height of the boss.

60. The vehicle according to any one of claims 55 to 57, wherein the battery assembly comprises a protruding portion, at least part of the protruding portion is located in the accommodating portion, and the protruding portion has a height not exceeding 94% of the height of the boss.

61. The vehicle according to claim 60, wherein the height of the protruding portion accounts for 74% to 86% of the height of the boss.

62. The vehicle according to any one of claims 49 to 61, wherein the battery assembly further comprises a busbar, at least part of the busbar is located in the accommodating portion, and a distance between an inner wall of the accommodating portion and the busbar in a first direction is not less than 1% of the dimension of the accommodating portion in the first direction, where the first direction is perpendicular to a thickness direction of the first box wall.

63. The vehicle according to claim 62, wherein the distance between the inner wall of the accommodating portion and the busbar in the first direction accounts for 2% to 10% of the dimension of the accommodating portion in the first direction.

64. The vehicle according to any one of claims 55 to 63, wherein the battery assembly comprises battery cells, the battery cells comprise terminal posts, and the terminal posts of at least two of the battery cells are located in the same accommodating portion.

65. The vehicle according to any one of claims 55 to 64, wherein the battery comprises first insulating members disposed on the inner wall of the accommodating portion.

66. The vehicle according to claim 65, wherein the battery assembly comprises battery cells, the battery cells comprise terminal posts, and the first insulating members are disposed opposite the terminal posts, respectively.

67. The vehicle according to claim 55, wherein the box cover comprises a box wall body and a second cap, the box wall body is provided with a second through hole that is in communication with the accommodating cavity, the second cap is detachably connected to the box wall body to cover the second through hole, and part or all of the boss forms the second cap.

68. The vehicle according to any one of claims 55 to 67, wherein a length direction of the boss is the same as a length direction of the accommodating cavity, and the boss and the accommodating cavity have the same dimension in the length direction;
or, the length direction of the boss is the same as a width direction of the accommodating cavity, and the boss has a length equal to the width of the first box wall.

69. The vehicle according to any one of claims 55 to 68, wherein the boss has a width not exceeding 500 mm;
and/or the boss has a height not exceeding 300 mm.

70. The vehicle according to any one of claims 55 to 69, wherein the width of the boss is in the range of 50 mm to 300 mm;
and/or the height of the boss is in the range of 5 mm to 100 mm.

71. The vehicle according to any one of claims 1 to 70, wherein the raised portion has a width not exceeding 500 mm;
and/or the raised portion has a height not exceeding 300 mm.

72. A battery for a vehicle, wherein the vehicle comprises a support plate, the battery is located on one side of the support plate, the support plate has a raised portion facing away from the battery, an accommodating space is formed on a side of the raised portion facing the battery, the battery comprises an accommodating box and a battery assembly, the battery assembly is accommodated in the accommodating box, the battery assembly comprises a protruding portion configured to extend toward the support plate to enter the accommodating space, and in a projection plane perpendicular to a protruding direction of the protruding portion, part of a projection of the battery assembly is located outside a projection of the protruding portion.

73. The battery according to claim 72, wherein the accommodating box has a holding space, the battery assembly is disposed in the holding space, one side of the holding space is open to form a first opening, and the first opening is covered with the support plate.

74. The battery according to claim 73, wherein the battery comprises a temperature control assembly disposed on a side of the battery assembly facing the first opening.

75. The battery according to claim 74, wherein the battery comprises a first adhesive layer configured to adhere the support plate to an outer surface of the temperature control assembly;
and/or the battery comprises a third adhesive layer adhered between the temperature control assembly and an outer surface of the battery assembly.

76. The battery according to claim 72, wherein the accommodating box comprises a first box wall, the first box wall being located on one side of the accommodating box, and a portion of the first box wall being configured to extend into the accommodating space.

77. The battery according to claim 76, wherein the accommodating box comprises a box body and a box cover, the first box wall forms the box cover, the box body has one side open to form a second opening, the box cover covers the second opening to form an accommodating cavity with the box body, and the battery is disposed in the accommodating cavity.

78. The battery according to claim 77, wherein the first box wall comprises a box wall body and a second cap, the box wall body is provided with a second through hole that is in communication with the accommodating cavity, and the second cap is detachably connected to the box wall body to cover the second through hole.

79. The battery according to claim 78, wherein the box cover further comprises a second sealing member disposed around the periphery of the second through hole, the second sealing member being sandwiched between the box wall body and the second cap to seal between the box wall body and the second cap.

80. The battery according to claim 78 or 79, wherein the second cap is mounted onto the box wall body by threaded fasteners, or
the second cap is slidably snap-fitted to the box wall body, or
the second cap is hinged to the box wall body.

81. The battery according to any one of claims 76 to 80, wherein one of outer surfaces of two opposite sides of a portion of the first box wall protrudes to form a boss while the other one forms an accommodating portion, at least part of the boss is configured to extend into the accommodating space, and a portion of the battery assembly is located in the accommodating portion.

82. The battery according to claim 81, wherein the box cover comprises a box wall body and a second cap, the box wall body is provided with a second through hole that is in communication with the accommodating cavity, the second cap is detachably connected to the box wall body to cover the second through hole, and part or all of the boss forms the second cap.
